# EUROPÄISCHE PATENTSCHRIFT

(11) **EP 3 106 345 B1**
(45) Veröffentlichungstag und Bekanntmachung des Hinweises auf die Patenterteilung: **26.02.2020**
(21) Anmeldenummer: 16174596.3
(22) Anmeldetag: 15.06.2016
(51) Int. Cl.: B60P 3/40

(54) **TRANSPORTVORRICHTUNG ZUM TRANSPORTIEREN EINES LÄNGLICHEN BAUTEILS UND VERFAHREN ZUM TRANSPORTIEREN EINES LÄNGLICHEN BAUTEILS**
TRANSPORT DEVICE FOR TRANSPORTING AN ELONGATED STRUCTURAL MEMBER AND METHOD FOR TRANSPORTING AN ELONGATED STRUCTURAL MEMBER
DISPOSITIF DE TRANSPORT D'UN COMPOSANT ALLONGE ET PROCEDE DE TRANSPORT D'UN COMPOSANT ALLONGE

(30) Priorität: 15.06.2015 DE 102015109464
(43) Veröffentlichungstag der Anmeldung: 21.12.2016
(73) Patentinhaber: eno energy systems GmbH, 18055 Rostock (DE)
(72) Erfinder: Porm, Karsten, 18236 Kröpelin OT Diedrichshagen (DE); Bockholt, Stefan, 18255 Kühlungsborn (DE); Hörenz, Martin, 10318 Berlin (DE)
(74) Vertreter: 2SPL Patentanwälte PartG mbB

(56) Entgegenhaltungen:
- WO-A1-2007/113352
- WO-A1-2007/147413
- US-A1- 2014 172 244
- US-A1- 2015 125 252

## Beschreibung

Beispiele beziehen sich auf eine Transportvorrichtung zum Transportieren eines länglichen Bauteils, ein Verfahren zum Transportieren eines länglichen Bauteils, ein Verfahren zum Erstellen eines Routenplans, ein Steuergerät und entsprechende Software-bezogene Implementierungen.

In vielen Bereichen der Technik und des Bauwesens werden Bauteile, Maschinen, Anlagen und Systeme verwendet, deren Komponenten zum Teil mehrere zehn Meter lang sind und aus unterschiedlichen Gründen gegebenenfalls nicht weiter zerlegbar sind. Beispiele kommen aus vielen unterschiedlichen Bereichen und umfassen beispielsweise Turmbauteile, mechanisch besonders beanspruchte Träger, Prozessbehälter, Rotorblätter für Windenergieanlagen, Tragflächen für Luftfahrzeuge, Antriebswellen für Wasserfahrzeuge und andere entsprechende längliche Bauteile, um nur einige Beispiele zu nennen. Beispiele kommen so unter anderem aus dem Bereich des Bauwesens ebenso wie aus dem Bereich des Maschinenbaus, der Elektrotechnik und der Verfahrenstechnik.

Gerade bei dem Transport dieser und ähnlicher Bauteile treten häufig Probleme auf, wenn die betreffenden Bauteile auf dem Landweg zu Binnenlandstandorten oder Verladeorten transportiert werden sollen. So können sich beispielsweise Höhenbegrenzungen während des Transports oder auch Probleme hinsichtlich von Kurvenradien aufgrund der Länge der betreffenden Bauteile ergeben. Beim Überlandtransport können so beispielsweise aufgrund von Brückendurchfahrten maximal durchfahrbare Höhen zu beachten sein. Aber auch aufgrund der Länge der betreffenden Bauteile von zum Teil mehreren zehn Metern kann bei einem Liegendtransport ein minimaler Kurvenradius häufig nicht unterschritten werden, was beispielsweise bei einem Transport auf der Straße zu Problemen führen kann.

Um gleichzeitig die sich während des Transports so ergebenden Höhenbegrenzungen einzuhalten und dennoch auch engere Kurven durchfahren zu können, werden solche Bauteile während des Transports teilweise aufgerichtet, sodass die Radien der durchfahrbaren Kurven gegenüber einem liegenden Transport der Bauteile verkleinert werden können, während beim Durchfahren höhenbeschränkter Passagen die Bauteile wieder in die Horizontale verbracht werden, um so einen sicheren Transport der Bauteile auch in diesen Situationen zu ermöglichen.

Die EP 1 659 026 A1 beschreibt so beispielsweise eine Transportvorrichtung für ein längliches Objekt wie ein Rotorblatt einer Windturbine oder dergleichen, bei der zwei Unterwagen über ein Seil oder einen Draht miteinanderverbunden sind, sodass bei Verringerung des Abstandes der beiden Unterwagen das Rotorblatt aufgerichtet werden kann. Dieses liegt hier auf einem Hebelarm auf. Die DE 10 2005 060 185 A1 beschreibt ein Fahrzeug, eine Trägereinheit und ein Verfahren zum Transport eines großvolumigen Bauteils mit Überlänge. Eine ähnliche Ausgestaltung zeigt die WO 2013/086769 A1. Die DE 10 2009 040 200 A1, die eine Transportvorrichtung für ein längliches Objekt beschreibt, die EP 2 666 669 A1, die sich mit dem Transport eines Blatts einer Windturbine insbesondere für den Transport entlang kurviger Straßen beschäftigt, sowie die WO 2007/147413 A1, die sich auf ein Fahrzeug zum Transportieren eines Rotorblatts einer Windturbine, ein Steuerungssystem und ein entsprechendes Verfahren bezieht, zeigen sehr ähnliche Konstruktionen.

Häufig sind die zu transportierenden Bauteile mehrere Tonnen, wenn nicht sogar mehrere zehn Tonnen schwer, sodass auf die betreffenden Transportvorrichtungen und ihre Komponenten zum Teil erhebliche Kräfte und Momente einwirken können. Je nach Konstruktion können diese bei einem Aufrichten, bei einem Absenken oder auch permanent auf die betreffenden Komponenten einwirken und so beispielsweise zu einem erhöhten Verschleiß, einem höheren Energiebedarf oder auch zu einer anderen Belastung führen und so beispielsweise auf die Lebensdauer der Transportvorrichtung begrenzend wirken kann.

Es besteht daher ein Bedarf daran, auftretende Kräfte und Momente zu reduzieren. Diesem Bedarf trägt eine Transportvorrichtung, ein Verfahren zum Transportieren eines bezogen auf eine Haupterstreckungsrichtung länglichen Bauteils, ein Verfahren zum Erstellen eines Routenplans zum Transportieren eines bezogen auf eine Haupterstreckungsrichtung länglichen Bauteils, ein Steuergerät oder ein Computerprogrammprodukt gemäß einem der unabhängigen Patentansprüche Rechnung.

Eine Transportvorrichtung zum Transportieren eines bezogen auf eine Haupterstreckungsrichtung länglichen Bauteils mit einem ersten und einem zweiten Ende, wobei das erste Ende einem Schwerpunkt des Bauteils näher als das zweite Ende ist, umfasst eine Bauteilaufnahme und eine Anhebevorrichtung. Die Bauteilaufnahme ist mit der Anhebevorrichtung über ein Festlager um wenigstens eine erste Drehachse verdrehbar gekoppelt. Die Anhebevorrichtung ist dabei ausgebildet, um das Festlager wenigstens in einer vertikalen Richtung zu bewegen. Die Bauteilaufnahme umfasst eine Befestigung, die ausgebildet ist, um das Bauteil an der Bauteilaufnahme zu befestigen. Die Bauteilaufnahme ist hierbei derart ausgebildet, dass ein gemeinsamer Schwerpunkt der Bauteilaufnahme und des zu transportierenden Bauteils entlang der Haupterstreckungsrichtung des Bauteils zwischen dem ersten Ende des Bauteils und dem Festlager liegt.

Durch diese Lage des gemeinsamen Schwerpunkts der Bauteilaufnahme und des zu transportierenden Bauteils zwischen dem ersten Ende, welches dem Schwerpunkt des Bauteils näher ist als das zweite Ende, und dem Festlager, über welches gerade die Bauteilaufnahme mit der Anhebevorrichtung bezogen auf die erste Drehachse verdrehbar gekoppelt ist, kann so eine Reduzierung der auf die Transportvorrichtung und ihre Komponenten einwirkenden Kräfte und Momente erzielt werden. Ergänzend oder alternativ kann es gegebenenfalls auch möglich sein, aufgrund dieser Lage des gemeinsamen Schwerpunkts den Energieverbrauch der Transportvorrichtung zu reduzieren, da beispielsweise ein Kompensieren von auf die Komponenten der Transportvorrichtung einwirkenden Momenten gegebenenfalls reduziert oder sogar vollständig unterbunden werden kann.

Ein Festlager kann hierbei ein Lager darstellen, welches alle Translationsbewegungen des gelagerten Körpers unterbindet. Durch eine entsprechende Translationsbewegung des Festlagers kann so der über das Festlager gelagerte Körper entsprechend ebenso translatorisch bewegt werden. Wird also beispielsweise durch die Anhebevorrichtung die Bauteilaufnahme wenigstens entlang der vertikalen Richtung bewegt, so bewegt sich auch die Bauteilaufnahme entsprechend entlang der vertikalen Richtung. Je nach konkreter Ausgestaltung des Festlagers kann dieses beispielsweise bezüglich einer oder mehrerer Drehachsen jedoch im Wesentlichen frei von einer Drehmomentübertragungsfähigkeit sein. So kann bezüglich einer oder mehrerer Drehachsen der gelagerte Körper beispielsweise im Wesentlichen frei verdrehbar sein. Eine Drehmomentübertragung bezogen auf eine Drehbewegung um die entsprechende Drehachse kann so gegebenenfalls nicht möglich sein. Dies kann beispielsweise bedeuten, dass der über das Festlager gelagerte Körper um eine oder mehrere Drehachsen verdrehbar ist. Wird so also beispielsweise das Festlager wenigstens entlang der vertikalen Richtung bewegt, so bewegt sich auch die über das Festlager drehbar gekoppelte Bauteilaufnahme, die jedoch gegebenenfalls - je nach konstruktiver Ausgestaltung des Festlagers - eine entsprechende Drehbewegung hierbei ausführen kann.

Im Unterschied hierzu kann ein Loslager beispielsweise in Form eines Gleitlagers oder einer anderen entsprechenden Lagertechnologie implementiert sein. Das Loslager kann beispielsweise nur bezogen auf eine oder zwei linear unabhängige Translationsbewegungsrichtungen eine entsprechende Translationsbewegung des über das Loslager gelagerten Körpers ermöglichen bzw. erzwingen. Das Loslager kann so bezogen auf eine oder mehrere weitere linear unabhängige Translationsrichtungen, bezüglich derer das Loslager gerade eine Bewegung gerade nicht erzwingt, eine entsprechende unabhängige Bewegung ermöglichen. Bei einem Loslager existiert so stets wenigstens eine Raumrichtung, entlang derer der durch das Loslager gelagerte Körper eine Translationsbewegung auszuführen vermag. Über eine Kombination Festlager-Loslager kann so beispielsweise eine statische Bestimmtheit ermöglicht werden, auch wenn dies nicht zwingend notwendig ist.

Eine mechanische Kopplung zweier Komponenten umfasst sowohl eine unmittelbare, wie auch eine mittelbare Kopplung, also beispielsweise eine Kopplung über eine weitere Struktur, ein weiteres Objekt oder eine weitere Komponente. Elektrische oder andere Komponenten können miteinander mittelbar über eine weitere Komponente oder unmittelbar miteinander derart gekoppelt sein, dass diese einen informationstragenden Signalaustausch zwischen den betreffenden Komponenten ermöglichen. So kann die entsprechende Kopplung abschnittsweise oder vollständig beispielsweise elektrisch, optisch, magnetisch oder mittels Funktechnik implementiert und umgesetzt sein. Die Signale können hierbei hinsichtlich ihres Wertebereichs sowie ihres zeitlichen Verlaufs kontinuierlich, diskret oder, beispielsweise abschnittsweise, beide Arten umfassen. Es kann sich so beispielsweise um analoge oder digitale Signale handeln. Ein Signalaustausch kann darüber hinaus auch über ein Schreiben bzw. Lesen von Daten in Register oder andere Speicherstellen erfolgen.

Optional kann bei einer Transportvorrichtung die Bauteilaufnahme derart ausgebildet sein, dass der gemeinsame Schwerpunkt höchstens 10%, bevorzugt höchstens 5% einer Gesamtlänge des Bauteils entlang der Haupterstreckungsrichtung von dem Festlager entfernt angeordnet ist. Hierdurch kann es möglich sein, die auf die Komponenten der Transportvorrichtung einwirkenden Kräfte und Momente sehr stark zu reduzieren, ohne beispielsweise eine Selbststabilisierung, wie sie durch die Lage des gemeinsamen Schwerpunkts erzielbar ist, auch unter ungünstigen Betriebsbedingungen zu gefährden. So kann es beispielsweise möglich sein, dass selbst bei einer nicht vollständig senkrecht zur Richtung der Schwerebeschleunigung ausgerichteten Transportvorrichtung dennoch ein Anheben des länglichen Bauteils möglich ist, ohne beispielsweise ein Überschlagen desselben befürchten zu müssen oder einem Solchen entgegenzuwirken.

Das zu transportierende längliche Bauteil weist hierbei entlang einer Haupterstreckungsrichtung im Sinne einer Geraden eine Ausdehnung auf, die deutlich größer ist als bezogen auf zwei weitere Erstreckungsrichtungen, die zusammen mit der Haupterstreckungsrichtung linear unabhängig sind. Die drei Erstreckungsrichtungen, also die zwei zuvor genannten Erstreckungsrichtungen sowie die Haupterstreckungsrichtung können so ein Koordinatensystem bilden, in dem das Bauteil vollständig beschreibbar ist. Neben der Haupterstreckungsrichtung sind ebenso die beiden weiteren Erstreckungsrichtungen, die im Folgenden als erste und zweite Nebenerstreckungsrichtung bezeichnet werden, Vektoren oder Geraden im mathematischen Sinne. Die Haupterstreckungsrichtung und die beiden Nebenerstreckungsrichtungen können so - im Unterschied zu einem lokalen Koordinatensystem - die Basis eines globalen Koordinatensystems bilden. Stehen diese Richtungen senkrecht aufeinander, bilden sie ferner ein rechtwinkliges Koordinatensystem. Weisen sie ferner jeweils eine Länge 1 in entsprechenden Abmessungen auf, handelt es sich um ein globales kartesisches Koordinatensystem, dessen Basis die drei genannten Erstreckungsrichtungen bilden.

Das längliche Bauteil kann so beispielsweise entlang der Haupterstreckungsrichtung eine Ausdehnung aufweisen, die wenigstens ein 2-Faches der Erstreckungen entlang der Nebenerstreckungsrichtungen darstellt. Selbstverständlich können auch hier höhere Vielfache auftreten, wie beispielsweise wenigstens ein 5-Faches, wenigstens ein 10-Faches oder wenigstens ein 20-Faches. Da die Haupterstreckungsrichtung ebenso wie die beiden Nebenerstreckungsrichtungen Geraden bzw. in Bezug auf ihre Richtung von der Position des Raumes unabhängige Vektoren darstellen, muss so eine Gerade entlang der Haupterstreckungsrichtung, die an dem ersten Ende des länglichen Bauteils beginnt, bei weitem nicht vollständig innerhalb des länglichen Bauteils und damit ebenso nicht durch das zweite Ende verlaufen. Beispielsweise kann so im Bereich des zweiten Endes eine Krümmung des länglichen Bauteils vorliegen, sodass das zweite Ende gerade nicht mehr auf einer Geraden liegt, die durch das erste Ende des länglichen Bauteils führt und durch die Haupterstreckungsrichtung hinsichtlich ihrer Richtung gegeben ist. Selbstverständlich können jedoch andere längliche Bauteile auch so ausgestaltet sein, dass ihr erstes und ihr zweites Ende auf einer solchen Geraden liegen.

Unabhängig davon kann aufgrund einer entsprechenden Ausgestaltung der Form des länglichen Bauteils diese Gerade vollständig innerhalb des länglichen Bauteils verlaufen, jedoch zumindest auch teilweise außerhalb desselben liegen. In einem solchen Fall kann so eine Oberfläche des länglichen Bauteils die zuvor beschriebene Gerade, die durch die Haupterstreckungsrichtung hinsichtlich ihrer Richtung gegeben ist und das erste Ende schneidet, ebenso schneiden. Je nach konkreter Ausgestaltung kann eine solche Gerade dann die Oberfläche erneut schneiden, wenn beispielsweise das zweite Ende des Bauteils auf der Geraden liegen sollte. Anordnungen der Schwerpunkte und anderer Punkte des betreffenden länglichen Bauteils sind so im Sinne einer Projektion auf die betreffende Erstreckungsrichtung, also beispielsweise auf die Haupterstreckungsrichtung oder eine der beiden Nebenerstreckungsrichtungen zu verstehen.

Ergänzend oder alternativ kann eine Transportvorrichtung ausgebildet sein, um ein Bauteil zu transportieren, das hinsichtlich seiner Masse und einer Lage seines Schwerpunkts einer vorbestimmten Spezifikation entspricht, sodass der gemeinsame Schwerpunkt der Bauteilaufnahme und des zu transportierenden Bauteils entlang der Haupterstreckungsrichtung des Bauteils entsprechend zwischen dem ersten Ende des Bauteils und dem Festlager bei dem Transport des Bauteils liegt. Anders ausgedrückt kann eine Transportvorrichtung so ausgestaltet sein, dass diese für längliche Bauteile verwendet werden kann, die der vorbestimmten Spezifikation entsprechen, um so die zuvor bestimmte Lage des gemeinsamen Schwerpunkts zu erzielen.

Ergänzend oder alternativ können bei einer Transportvorrichtung das Festlager oder wenigstens eine Komponente des Festlagers und die Befestigung starr mit der Bauteilaufnahme verbunden sein. Die Bauteilaufnahme kann so als ein starres Objekt implementiert werden, an dem über die Befestigung das Bauteil befestigt werden kann, und an dem wenigstens eine Komponente des Festlagers ebenso starr mit der Bauteilaufnahme verbunden ist. Es kann so eine Formveränderung der Bauteilaufnahme außer durch gegebenenfalls während des Transports, dem Beladen oder andere entsprechend auftretende mechanische Belastungen unterbunden werden, wodurch die Bauteilaufnahme leichter herstellbar ist. Auch kann diese gegebenenfalls mechanisch stabiler implementiert werden.

Ergänzend oder alternativ kann bei einer Transportvorrichtung die Bauteilaufnahme eine Befestigung für wenigstens ein Zusatzgewicht aufweisen, die derart angeordnet ist, dass durch Anbringen eines Zusatzgewichtes an die Befestigung für das wenigstens eine Zusatzgewicht der gemeinsame Schwerpunkt wenigstens entlang der Haupterstreckungsrichtung des Bauteils veränderbar ist. Durch den Einsatz einer entsprechenden Befestigung für wenigstens ein Zusatzgewicht kann es so möglich sein, die Transportvorrichtung auch für größere, kleinere oder anders ausgestaltete Bauteile verwendet werden, durch die beispielsweise die vorgenannte vorbestimmte Spezifikation erweiterbar sein kann. Anders ausgedrückt kann es hierdurch gegebenenfalls möglich sein, die Transportvorrichtung für unterschiedliche geformte Bauteile zu verwenden. Ergänzend oder alternativ kann es durch den Einsatz eines oder mehrerer Zusatzgewichte ebenso möglich sein, die Lage des gemeinsamen Schwerpunkts von Bauteil und Bauteilaufnahme senkrecht zur Haupterstreckungsrichtung zu variieren. Hierdurch kann es möglich sein, den gemeinsamen Schwerpunkt beispielsweise auf die Haupterstreckungsrichtung oder auch eine andere ausgezeichnete Richtung, wie etwa eine Symmetrieachse oder eine Längsachse von Bauteil und/oder Bauteilaufnahme, auszurichten, um beispielsweise Kräfte und Momente beim Aufrichten oder Absenken des Bauteils weiter zu reduzieren. So kann ergänzend oder alternativ bei einer Transportvorrichtung die Bauteilaufnahme eine Befestigung für wenigstens ein Zusatzgewicht aufweisen, die derart angeordnet ist, dass durch Anbringen eines Zusatzgewichtes an die Befestigung für das wenigstens eine Zusatzgewicht der gemeinsame Schwerpunkt wenigstens senkrecht zu der Haupterstreckungsrichtung des Bauteils veränderbar ist.

Ergänzend oder alternativ kann bei einer Transportvorrichtung das Festlager einen Bolzen und eine Aufnahme für den Bolzen umfassen, die ausgebildet ist, um den Bolzen aufzunehmen. Hierdurch kann es mit konstruktiv vergleichsweise einfachen Mitteln möglich sein, das Festlager zu implementieren, welches einen zuverlässigen Betrieb ermöglichen kann. Die Bauteilaufnahme kann beispielsweise den Bolzen und die Anhebevorrichtung die Aufnahme für den Bolzen oder die Anhebevorrichtung den Bolzen und die Bauteilaufnahme die Aufnahme für den Bolzen umfassen. Ebenso kann jedoch sowohl die Bauteilaufnahme wie auch die Anhebevorrichtung jeweils wenigstens eine Aufnahme für einen Bolzen umfassen, der beispielsweise während einer Montage der Bauteilaufnahme an der Anhebevorrichtung mit den Aufnahmen der Bauteilaufnahme und der Anhebevorrichtung verbunden wird.

Ergänzend oder alternativ kann bei einer Transportvorrichtung die Bauteilaufnahme ferner eine Auflagefläche aufweisen, die ausgebildet und angeordnet ist, um mit dem Bauteil bei einer von einer vertikalen Ausrichtung des Bauteils abweichenden Ausrichtung in Kontakt zu stehen oder in Kontakt treten zu können, um das Bauteil zu stützen. Hierdurch kann es gegebenenfalls möglich sein, konstruktiv bedingte Verformungen zu begrenzen und so das Bauteil vor einer mechanischen Überbelastung während des Transports zu schützen. Weist so beispielsweise das Bauteil eine Elastizität auf, die für den späteren Betrieb des Bauteils wünschenswert oder sogar notwendig ist und zu einer Durchbiegung des länglichen Bauteils während des Transports führen kann, vermag sich so das Bauteil an der Auflagefläche der Bauteilaufnahme abzustützen. Hierdurch kann es dann gegebenenfalls möglich sein, die Durchbiegung des betreffenden Bauteils zu begrenzen und so eine Beschädigung des Bauteils gegebenenfalls zu vermeiden. Gleiches kann ebenso während des Transports und durch den Transport hervorgerufenen Schwingungen des Bauteils einhergehen, die ebenso eine entsprechende mechanische Verformung des Bauteils bewirken können.

Die Begriffe "vertikal" und "horizontal" können hierbei auf die Ausrichtung im Schwerefeld der Erde bezogen sein. Die vertikale Richtung kann so durch die Richtung der Schwerebeschleunigung, also die Richtung der Erdanziehung gegeben sein. Die vertikale Richtung verläuft entlang dieser Richtung, wohingegen die horizontale Richtung bzw. die horizontalen Richtungen senkrecht zu der vertikalen Richtung, also senkrecht zur der Beschleunigungsrichtung des Erdschwerefelds liegen. Anders ausgedrückt ist die vertikale Richtung durch die Richtung der Schwerkraft gegeben. Die horizontale Richtung oder die horizontalen Richtungen stehen hierbei senkrecht auf der Richtung des Schwerefelds.

Optional kann bei einer solchen Transportvorrichtung die Bauteilaufnahme einen Abstandshalter oder Lagerring aufweisen, der die Auflagefläche umfasst. Durch die Ausgestaltung in Ringform kann so der zuvor beschriebene Schutz des Bauteils auch bei einer Rotation des Bauteils um seine Längsachse, also beispielsweise um die Haupterstreckungsrichtung unabhängig von der genauen Lage des Bauteils möglich sein, sodass eine Transportsicherheit des Bauteils gegenüber Beschädigungen oder Überbelastungen gegebenenfalls verbessert werden kann.

Ergänzend oder alternativ kann bei einer solchen Transportvorrichtung die Auflagefläche entlang der Haupterstreckungsrichtung des Bauteils zwischen dem zweiten Ende des Bauteils und dem Festlager angeordnet sein. Durch die Anordnung des gemeinsamen Schwerpunkts zwischen dem Festlager und dem ersten Ende kann so eine hinter dem Festlager bewirkte Abstützung des Bauteils erfolgen, durch die Vibrationen und andere mechanische Deformationen gegebenenfalls leichter unterbunden werden können, wenn das Bauteil im Bereich des ersten Endes über die Befestigung mit der Bauteilaufnahme verbunden ist. Hierdurch kann die Transportsicherheit des Bauteils mit vergleichsweise einfachen technischen Mitteln weiter verbessert werden, indem beispielsweise der Schwingwinkel bzw. der Winkel der Belastung entlang der Haupterstreckungsrichtung durch eine Anordnung der Auflagefläche hinter dem Festlager bei ansonsten gleichen Dimensionen reduziert werden kann.

Ergänzend oder alternativ kann bei einer Transportvorrichtung die Befestigung ausgebildet sein, um mit dem Bauteil an dem ersten Ende des Bauteils starr verbunden zu sein. Hierdurch kann es gegebenenfalls möglich sein, eine an dem ersten Ende des Bauteils vorhandene Befestigungsstruktur zu verwenden, um dieses mit der Bauteilaufnahme der Transportvorrichtung über die Befestigung zu verbinden. So kann beispielsweise das Bauteil über seine Befestigungsstruktur unmittelbar mit der Befestigung verschraubt oder mithilfe anderer Befestigungstechniken befestigt werden. Weist so beispielsweise das Bauteil seinerseits eine entsprechende Befestigungsstruktur auf, so kann gegebenenfalls die mechanische Stabilität des Bauteils in Bezug auf seine Befestigungsstruktur ausgenutzt werden, um das Bauteil an der Transportvorrichtung zu befestigen.

Ergänzend oder alternativ kann bei einer Transportvorrichtung die Bauteilaufnahme ausgebildet sein, um das zweite Ende des Bauteils in dem an der Befestigung befestigten Zustand des Bauteils über die Bauteilaufnahme überstehen zu lassen. Das Bauteil kann so beispielsweise über die Bauteilaufnahme hinausstehen, wodurch die Transportvorrichtung gegebenenfalls kürzer bzw. kleiner ausgestaltet werden kann, wodurch ihre Handhabung in einem nicht befestigten Zustand vereinfacht werden kann. Auch kann es gegebenenfalls hierdurch möglich sein, die Befestigung der Bauteilaufnahme an dem Bauteil zu vereinfachen, da diese entsprechend kleiner und damit kompakter ausgestaltet werden kann.

Ergänzend oder alternativ kann bei einer Transportvorrichtung die Bauteilaufnahme ausgebildet sein, sodass das erste Ende des Bauteils in einem Innenraum der Bauteilaufnahme in dem an der Befestigung befestigten Zustand des Bauteils angeordnet ist. Hierdurch kann es gegebenenfalls möglich sein, das Bauteil beispielsweise im Bereich des ersten Endes, welches beispielsweise mechanisch stärker belastet sein kann, vor Umwelteinflüssen und damit Beschädigungen währen des Transports durch die Bauteilaufnahme zu schützen. Hierdurch kann es also möglich sein, die Transportsicherheit des Bauteils weiter zu steigern.

Ergänzend oder alternativ kann bei einer Transportvorrichtung die Befestigung ausgebildet sein, um das Bauteil translatorisch fest mit der Bauteilaufnahme zu verbinden. Hierdurch kann es möglich sein, durch die Befestigung eine Sicherung des Bauteils hinsichtlich translatorischer Bewegungen zu ermöglichen.

Optional kann bei einer solchen Transportvorrichtung die Befestigung ausgebildet sein, um das Bauteil über wenigstens eine Schraubverbindung mit der Befestigung zu befestigen und/oder eine Verbindung über wenigstens einen Bolzen zu schaffen. Hierdurch kann es mit technisch einfachen Mitteln möglich sein, das Bauteil an der Befestigung anzubringen und so für den Transport vorzubereiten.

Anstelle der vorgenannten Verbindungstechniken können jedoch auch andere Verbindungstechniken zum Schaffen der Verbindung zwischen dem Bauteil und der Bauteilaufnahme verwendet werden. Grundsätzlich kann hier jede formschlüssige, stoffschlüssige und/oder kraftschlüssige Verbindung verwendet werden, wobei es hier auf den konkreten Einzelfall ankommen kann, welche Technik die Bevorzugte darstellt. Verfügt das Bauteil beispielsweise bereits über entsprechende Befestigungsstrukturen, die zum Schaffen einer formschlüssigen Verbindung an dem späteren Einsatzort des Bauteils dienen sollen, so können diese gegebenenfalls verwendet werden, um das Bauteil auch über die Befestigung an der Bauteilaufnahme formschlüssig zu verbinden. Eine kraftschlüssige oder reibschlüssige Verbindung kommt durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit im Allgemeinen eine Normalkraftkomponente zwischen den beiden Verbindungspartnern voraus.

Ergänzend oder alternativ kann bei einer Transportvorrichtung die Kopplung zwischen der Bauteilaufnahme und der Anhebevorrichtung mehrfach lösbar und wiederherstellbar sein. Hierdurch kann es möglich sein, die Bauteilaufnahme von der Anhebevorrichtung zu separieren und so die Bauteilaufnahme beispielsweise separat von der Anhebevorrichtung an dem zu transportierenden Bauteil zu befestigen. Dies kann so eine leichtere Montierbarkeit des Bauteils in der Bauteilaufnahme ermöglichen, da bei diesem Prozess weniger Einschränkungen vorherrschen, als wenn die Bauteilaufnahme und die Anhebevorrichtung stets miteinander verbunden wären. Darüber hinaus kann es gegebenenfalls auch möglich sein, durch Variationen der Bauteilaufnahme mithilfe der gleichen Anhebevorrichtung und weiterer Komponenten der Transportvorrichtung unterschiedliche Bauteile zu transportieren, die sonst jenseits der bereits zuvor erwähnten vorbestimmten Spezifikationen liegen könnten. Anders ausgedrückt kann hierdurch die Transportvorrichtung gegebenenfalls flexibler für unterschiedlichere Bauteile eingesetzt werden.

Ergänzend oder alternativ kann bei einer Transportvorrichtung die Anhebevorrichtung eine Scherenhubvorrichtung, eine Gelenkgabel und/oder ein einseitiges Gelenk umfassen. So kann mithilfe vergleichsweise einfacher Techniken eine sehr flexibel einsetzbare Transportvorrichtung geschaffen werden. Ergänzend oder alternativ kann bei einer Transportvorrichtung die Anhebevorrichtung hydraulisch, pneumatisch und/oder elektrisch betrieben sein. Die Anhebevorrichtung kann so beispielsweise einen oder mehrere Motoren, die beispielsweise elektrisch betrieben sein können, oder auch einen oder mehrere Aktuatoren aufweisen, die hydraulisch und/oder pneumatisch betrieben sein können. Ebenso können Kombinationen derselben eingesetzt werden.

Ergänzend oder alternativ kann die Bauteilaufnahme rotationssymmetrisch ausgestaltet sein. Hierdurch kann es möglich sein, das zu transportierende Bauteil leichter an der Bauteilaufnahme zu befestigen oder mit dieser zu verbinden. Hierdurch kann es möglich sein, die Wahrscheinlichkeit einer fehlerhaften Befestigung zu verringern. Ebenso kann es möglich, die Herstellung der Bauteilaufnahme zu vereinfachen. Diese kann beispielsweise auch mehrteilig ausgeführt sein. So kann die Bauteilaufnahme beispielsweise segmentweise und/oder ringweise ausgestaltet sein, sodass die Bauteilaufnahme stückweise mit dem zu transportierenden Bauteil verbunden werden kann.

Eine Komponente, also beispielsweise das Bauteil und/oder die Bauteilaufnahme, um nur zwei Beispiele zu nennen, kann beispielsweise eine n-zählige Rotationssymmetrie aufweisen, wobei n eine natürliche Zahl größer oder gleich 2 ist. Eine n-zählige Rotationssymmetrie liegt dann vor, wenn die betreffende Komponente beispielsweise um eine Rotations- oder Symmetrieachse um (360°/n) drehbar ist und dabei im Wesentlichen formenmäßig in sich selbst übergeht, also bei einer entsprechenden Drehung im Wesentlichen auf sich selbst im mathematischen Sinn abgebildet wird. Im Unterschied hierzu geht bei einer vollständigen rotationssymmetrischen Ausgestaltung einer Komponente bei einer beliebigen Drehung um jeden beliebigen Winkel um die Rotations- oder Symmetrieachse die Komponente formenmäßig im Wesentlichen in sich selbst über, wird also im mathematischen Sinn im Wesentlichen auf sich selbst abgebildet. Sowohl eine n-zählige Rotationssymmetrie wie auch eine vollständige Rotationssymmetrie werden hierbei als Rotationssymmetrie bezeichnet.

Ergänzend oder alternativ kann eine Transportvorrichtung ausgebildet sein, um das Festlager bezüglich einer Verdrehung um die erste Drehachse zu arretieren. Hierdurch kann es möglich sein, das Bauteil zusammen mit der Bauteilaufnahme anzuheben, ohne dass die zuvor beschriebene Verdrehung automatisch erfolgt. Das Festlager kann ferner ausgebildet sein, um die Arretierung vollständig oder teilweise auf eine stufenlose Art und Weise oder auch in Stufen zu lösen, um so die Verdrehung der Bauteilaufnahme gegebenenfalls zusammen mit dem Bauteil gegenüber der Anhebevorrichtung zu ermöglichen. Eine solche lösbare Arretierung kann beispielsweise auf Basis einer reibschlüssigen bzw. kraftschlüssigen Arretierung, aufgrund einer formschlüssigen, beispielsweise über Zahnräder mit oder ohne einen Freilauf, oder auch mithilfe elektromotorischer, pneumatischer oder hydraulischer Krafteinwirkung erfolgen. Das Festlager kann so beispielsweise eine reibschlüssige bzw. kraftschlüssige Bremse, eine lösbare Ratsche, einen Elektromotor, einen pneumatischen Aktuator oder auch einen hydraulischen Aktuator umfassen, um die aufgrund der zuvor beschriebenen Anordnung der Lage des Festlagers bezogen auf den gemeinsamen Schwerpunkt auftretende Kräfte und Momente abzufangen. Selbstverständlich können auch beliebige Kombinationen der zuvor genannten Techniken und der zuvor genannten Elemente implementiert werden. So kann beispielsweise eine reibschlüssige Arretierung mit einer mechanischen bzw. einer elektromotorischen kombiniert werden, um nur zwei Beispiele zu nennen. Hierdurch kann es möglich sein, die betreffende Arretierung zu lösen und beispielsweise durch die weitere Arretierung die Dynamik der betreffenden Komponenten zueinander zu reduzieren.

Ergänzend oder alternativ kann bei einer Transportvorrichtung die Befestigung ausgebildet sein, um das Bauteil um eine zweite Drehachse zu drehen. Die zweite Drehachse kann hierbei von der ersten Drehachse verschieden sein. Hierdurch kann es beispielsweise möglich sein, das Bauteil durch die Befestigung entlang der zweiten Drehachse auszurichten, um beispielsweise während des Transports auf das Bauteil einwirkende Kräfte zu reduzieren. Handelt es sich beispielsweise um ein nichtrotationssymmetrisches Objekt, kann durch eine Rotation um die zweite Drehachse das Bauteil beispielsweise so ausgerichtet werden, dass während des Transports durch Seitenwind oder andere Winde verursachte aerodynamische Kräfte auf das Bauteil reduziert werden. Hierdurch kann gegebenenfalls nicht nur das Bauteil selbst geschützt werden, sondern auch die mechanischen Komponenten der Transportvorrichtung, über die diese Kräfte abgeleitet werden müssen, können hierdurch gegebenenfalls weiter entlastet werden. Ebenfalls kann es möglich sein, den Transport des Bauteils mithilfe der Transportvorrichtung sicherer zu gestalten, da beispielsweise die bereits zuvor erwähnten aerodynamischen Kräfte reduziert werden können, sodass ein Transport des Bauteils auch bei höheren Windgeschwindigkeiten gegebenenfalls möglich sein kann.

Optional kann bei einer solchen Transportvorrichtung die Befestigung entsprechend einen Motor, einen Aktuator und/oder einen Drehteller umfassen, wobei der Motor, der Aktuator und/oder der Drehteller ausgebildet ist, um das Bauteil um die zweite Drehachse zu drehen. Hierdurch kann es mit vergleichsweise einfachen technischen Maßnahmen möglich sein, das Bauteil über den Motor, den Aktuator bzw. den Drehteller um die zweite Drehachse zu drehen. Bei dem Motor, dem Aktuator bzw. bei dem Drehteller kann es sich so beispielsweise um einen elektrisch betriebenen Motor bzw. elektrisch betriebenen Drehteller handeln, bei dem eine Versorgung des Motors bzw. des Drehtellers mit Energie durch einfaches Ankoppeln an die Transportvorrichtung oder eine andere entsprechende Komponente mithilfe einer einfachen Steckverbindung erfolgen kann. Gleiches kann ebenso für einen pneumatisch und/oder hydraulisch betätigten Aktuator, Motor bzw. Drehteller gelten, bei dem ebenfalls über entsprechende Steckverbindungen die pneumatische bzw. hydraulische Energie dem Aktuator, Motor bzw. Drehteller bereitgestellt werden kann.

Ergänzend oder alternativ kann bei einer solchen Transportvorrichtung die zweite Drehachse im Wesentlichen senkrecht zu der ersten Drehachse und/oder im Wesentlichen parallel zu der Haupterstreckungsrichtung des Bauteils verlaufen.

Ergänzend oder alternativ kann eine Transportvorrichtung ausgebildet sein, um auf oder mit einem Fahrzeug befestigbar zu sein, mit einem Fahrzeug koppelbar zu sein und/oder auf einem Fahrzeug integriert zu sein, um das Bauteil bei einer Geradeausfahrt in einer Ebene entlang einer Hauptbewegungsrichtung zu transportieren. Optional kann bei einer solchen Transportvorrichtung das Fahrzeug einen Anhänger oder ein Auflieger eines Kraftfahrzeugs, eines Lastkraftwagens oder einer Baumaschine sein, wobei das Fahrzeug ein Kraftfahrzeug, ein Lastkraftwagen oder eine Baumaschine ist. Ergänzend oder alternativ kann das Fahrzeug ebenso ein Wagon eines Schienenkraftfahrzeugs oder ein Schienenkraftfahrzeug sein. Hierdurch kann es möglich sein, das Bauteil auf der Straße, im Gelände oder auch auf Schienen zu transportieren. Im Falle einer Integration in ein Kraftfahrzeug und/oder Schienenkraftfahrzeug kann es so gegebenenfalls möglich sein, eine kompaktere und auf den gegebenen Fall besser zugeschnittene Transportvorrichtung zu implementieren. Andererseits besteht die Möglichkeit im Falle einer Ausgestaltung als mit einem Fahrzeug koppelbare Transportvorrichtung für ein deutliches Kosteneinsparungspotential, auch wenn hier durch das Fahrzeug selbst die Manövrierfähigkeit der Transportvorrichtung gegebenenfalls negativ beeinträchtig sein könnte.

Ergänzend oder alternativ kann bei einer solchen Transportvorrichtung die Anhebevorrichtung an dem Fahrzeug im Wesentlichen parallel zu einer Hochachse des Fahrzeugs drehbar befestigt sein. Hierdurch kann es möglich sein, das Bauteil auch um die Hochachse des Fahrzeugs bzw. eine im Wesentlichen dazu parallele Achse zu verdrehen, um so einen Transport des Bauteils auch in anderen eher schwierigeren Verhältnissen zu ermöglichen. Ergänzend oder alternativ kann die Transportvorrichtung ebenso ausgebildet sein, um die Anhebevorrichtung an dem Fahrzeug zu fixieren.

Ergänzend oder alternativ kann bei einer Transportvorrichtung die erste Drehachse im Wesentlichen senkrecht zu einer Hauptbewegungsrichtung der Transportvorrichtung liegen. Die Hauptbewegungsrichtung kann hierbei beispielsweise mit der Haupterstreckungsrichtung des länglichen Bauteils übereinstimmen. Hierdurch kann es möglich sein, durch ein Anheben und dabei Verdrehen der Bauteilaufnahme eine Länge der Transportvorrichtung inklusive dem Bauteil derart zu verkürzen, sodass auch engere Kurven und Abschnitte durch die Transportvorrichtung befahren werden können.

Ergänzend oder alternativ kann eine Transportvorrichtung ausgebildet sein, um bei einem Aufrichten des Bauteils in der Ebene durch ein Bewegen des Festlagers wenigstens in vertikaler Richtung die Bauteilaufnahme im Wesentlichen horizontal zu führen. Hierdurch kann es möglich sein, die Komponenten der Transportvorrichtung mechanisch weniger zu beanspruchen bzw. Energie einzusparen, die gegebenenfalls für eine Arretierung des Festlagers aufgewendet werden müsste. Die Transportvorrichtung kann so ebenso die Funktion des Loslagers bei einer klassischen Festlager-Loslager-Anordnung übernehmen.

Die Transportvorrichtung weist ferner einen Führungsbereich auf, der ausgebildet und angeordnet ist, um wenigstens zeitweise bei einem Aufrichten des Bauteils mit der Bauteilaufnahme in Kontakt zu stehen. Der Führungsbereich kann so beispielsweise zum Führen des Bauteils bzw. der Bauteilaufnahme dienen und so eine Komponente des zuvor beschriebenen Loslagers darstellen.

Optional kann bei einer solchen Transportvorrichtung der Führungsbereich Teil einer Magnetlagerung und/oder einer Gleitlagerung der Bauteilaufnahme bzw. des Bauteils sein. Ergänzend oder alternativ kann der Führungsbereich eine Abrollfläche und die Bauteilaufnahme bzw. das Bauteil wenigstens einen Wälzkörper aufweisen, wobei diese ausgebildet sind, um die Bauteilaufnahme bzw. das Bauteil zu führen. Optional kann bei einer solchen Transportvorrichtung der wenigstens eine Wälzkörper eine Rolle, eine Kugel und/oder ein Rad umfassen.

Ergänzend oder alternativ kann eine Transportvorrichtung ausgebildet sein, um durch ein Bewegen des Festlagers wenigstens in vertikaler Richtung die Bauteilaufnahme mit einem daran befestigten Bauteil in eine vertikale Position zu überführen. So kann es möglich sein, mithilfe der Transportvorrichtung das Bauteil zusammen mit der Bauteilaufnahme gegebenenfalls nicht nur teilweise, sondern vollständig aus einer horizontalen Ausrichtung, bei der beispielsweise die Haupterstreckungsrichtung in der horizontalen Ebene liegt, in die vertikale Richtung aufzurichten, bei der beispielsweise die Haupterstreckungsrichtung des Bauteils vertikal ausgerichtet sein kann. Hierbei wird davon ausgegangen, dass die Transportvorrichtung zumindest im Wesentlichen selber horizontal ausgerichtet ist, um beispielsweise einen Einfluss von Kippmomenten und Ähnlichem vernachlässigen zu können.

Ergänzend oder alternativ kann bei einer Transportvorrichtung das Festlager ausgebildet sein, um wenigstens zeitweise bei einem Aufrichten des Bauteils zumindest vor dem Erreichen einer vertikalen Position durch ein Bewegen des Festlagers wenigstens in vertikaler Richtung die Bauteilaufnahme frei oder gedämpft zu führen. Hierdurch kann es möglich sein, eine mechanische Belastung der Transportvorrichtung im Hinblick auf auftretende Kräfte und Momente zu reduzieren. Ebenso kann es möglich sein, einen Energiebedarf für das Aufrichten zu reduzieren. Die Transportvorrichtung kann so mithilfe einzelner Komponenten als Loslager dienen, über welches das Gesamtsystem der Transportvorrichtung gegebenenfalls zusammen mit dem zu transportierenden Bauteil statisch vollständig hierdurch bestimmt ist.

Ergänzend oder alternativ kann das Festlager ebenso ausgebildet sein, um wenigstens zeitweise bei dem Aufrichten des Bauteils zumindest vor dem Erreichen der vertikalen Position durch ein Bewegen des Festlagers wenigstens in vertikaler Richtung ausschließlich über das Festlager mit der Transportvorrichtung verbunden zu sein. In einem solchen Fall kann das Festlager die bei dem Aufrichten auftretenden Momente aufnehmen, welche versuchen das Bauteil zusammen mit der Bauteilaufnahme zu verkippen. Zu diesem Zweck kann das Festlager beispielsweise die bereits zuvor erwähnte Arretierung, einen Motor und/oder einen anderen beispielsweise pneumatisch und/oder hydraulisch betätigten Aktuator umfassen. Über eine oder mehrere dieser Komponenten können dann die auftretenden Kräfte und Momente übertragen werden, die das Festlager ohne die betreffenden Komponenten nicht übertragen könnte. Hierdurch kann es möglich sein, eine Lage des Bauteils und der Bauteilaufnahme während des Aufrichtens des Bauteils zumindest zeitweise derart zu kontrollieren, sodass das Bauteil keine unbeabsichtigte Lage einzunehmen vermag.

Ergänzend oder alternativ kann eine Transportvorrichtung ausgebildet sein, um wenigstens zeitweise nach einem Aufrichten des Bauteils durch ein Bewegen des Festlagers wenigstens in vertikaler Richtung der Bauteilaufnahme ein freies Schwingen zu ermöglichen. Hierdurch kann es möglich sein, auch die nach dem Aufrichten des Bauteils auftretenden Kräfte und Momente durch die inhärent vorliegende Reibung des Festlagers langsam abbauen zu lassen. Aufgrund der Lage des Schwerpunkts zu dem Festlager können auch hier wiederum auftretende Kräfte und Momente gegebenenfalls reduziert, wenn nicht sogar minimiert werden.

Das Bauteil kann beispielsweise ein Rotorblatt einer Windenergieanlage sein. So kann alternativ oder ergänzend die Transportvorrichtung ausgebildet sein, um über die Befestigung ein Rotorblatt einer Windenergieanlage aufzunehmen. So kann ergänzend oder alternativ bei einer Transportvorrichtung die Befestigung ausgebildet sein, um das Rotorblatt beispielsweise an seiner Wurzel an der Befestigung zu befestigen. Hierdurch kann es möglich sein, die an der Wurzel ohnehin vorgesehenen Befestigungsstrukturen zum Befestigen des Rotorblatts an der späteren Windenergieanlage, beispielsweise an einem Flansch, ebenso zur Befestigung an der Transportvorrichtung während des Transports heranzuziehen. Die an der Wurzel vorgesehenen Befestigungsstrukturen sind so typischerweise derart ausgestaltet, dass diese eine ausreichende mechanische Stabilität aufweisen, um das Gewicht des Rotorblatts zu halten. Hierdurch kann es gegebenenfalls möglich sein, ohne zusätzliche Befestigungsstrukturen an dem Rotorblatt auszukommen, die die Oberfläche des Rotorblatts negativ beeinflussen könnten.

Ein Verfahren zum Transportieren eines bezogen auf eine Haupterstreckungsrichtung länglichen Bauteils mittels einer Transportvorrichtung, wie sie zuvor beschrieben wurde, umfasst ein wenigstens teilweises oder ein vollständiges Aufrichten des an der Bauteilaufnahme befestigten Bauteils durch Anheben des Festlagers wenigstens entlang einer vertikalen Richtung auf einem Transportweg. Hierdurch kann es möglich sein, die auf die Transportvorrichtung bzw. ihre Komponenten einwirkenden Kräfte und Momente zu reduzieren und gleichzeitig einen Transport des länglichen Bauteils auch um engere Kurvenradien zu ermöglichen, als dies bei einem Transport des Bauteils entlang der horizontalen Richtung möglich wäre.

Optional kann das Verfahren zum Transportieren ferner ein wenigstens teilweises oder vollständiges Absenken des an der Bauteilaufnahme befestigten Bauteils durch ein Absenken des Festlagers wenigstens entlang der vertikalen Richtung auf dem Transportweg umfassen. Hierdurch kann es möglich sein, die Aerodynamik der Transportvorrichtung zu verbessern. Ebenso kann es möglich sein, hierdurch die bei vielen Transporten maximale Höhe der Transportvorrichtung zusammen mit dem zu transportierenden Bauteil einzuhalten. Ebenso kann es möglich sein, durch eine hiermit verbundene Verlagerung des gemeinsamen Schwerpunkts des zu transportierenden Bauteils und der Bauteilaufnahme das Auftreten von Kippmomenten senkrecht zu einer Hauptbewegungs- oder Haupttransportrichtung zu reduzieren. Auch können aufgrund der typischerweise unmittelbar am Boden herrschenden geringeren Windgeschwindigkeiten gegebenenfalls die auf das Bauteil und die Transportvorrichtung einwirkenden aerodynamischen Kräfte reduziert werden. So kann das Bauteil beispielsweise nach einem vollständigen oder teilweisen Aufrichten wieder in einen abgesenkten Zustand versetzt werden, der zwar gegebenenfalls einen minimalen durchfahrbaren Kurvenradius vergrößert, jedoch einen oder mehrere andere Effekte ermöglicht, wie sie oben beschrieben sind.

Ergänzend oder alternativ kann bei einem Verfahren das wenigstens teilweise oder vollständige Aufrichten des Bauteils bei einem Stillstehen der Transportvorrichtung oder eines mit der Transportvorrichtung gekoppelten Fahrzeugs oder bei einem Unterschreiten einer vorgegebenen Maximalgeschwindigkeit der Transportvorrichtung oder des mit der Transportvorrichtung gekoppelten Fahrzeugs erfolgen. Hierdurch kann eine Transportsicherheit gegebenenfalls weiter verbessert werden, indem aus der Bewegung der Transportvorrichtung resultierende Instabilitäten, Kräfte und Momente ausgeschlossen oder reduziert werden, die eine für die Transportvorrichtung und das zu transportierende Bauteil kritische Fahrsituationen hervorrufen könnten. Die vorgegebene Maximalgeschwindigkeit kann beispielsweise bei 20 km/h, 15 km/h, 10 km/h, 5 km/h oder auch 3 km/h je nach Art des zu transportierenden Bauteils, seiner Größe, seiner Abmessungen und anderer beispielsweise umweltbedingter Parameter liegen.

Bei einem solchen Verfahren kann das wenigstens teilweise Aufrichten des Bauteils beispielsweise ausschließlich bei einem Stillstehen der Transportvorrichtung oder des mit der Transportvorrichtung gekoppelten Fahrzeugs oder bei dem Unterschreiten der vorgegebenen Maximalgeschwindigkeit der Transportvorrichtung oder des mit der Transportvorrichtung gekoppelten Fahrzeugs erfolgen.

Optional können diese Implementierungen ebenso entsprechend für das wenigstens teilweise Absenken bzw. das vollständige Absenken des Bauteils umgesetzt werden. Sowohl das wenigstens teilweise Aufrichten wie auch das wenigstens teilweise Absenken umfassen hierbei jeweils das vollständige Aufrichten bzw. das vollständige Absenken.

Ergänzend oder alternativ kann bei einem Verfahren das wenigstens teilweise oder vollständige Aufrichten des Bauteils ein Aufrichten des Bauteils um wenigstens 5° gegenüber einer horizontalen Ebene umfassen. Ebenso kann es ein Aufrichten um wenigstens 15°, wenigstens 30°, um wenigstens 45° oder um wenigstens 60° gegenüber der horizontalen Ebene umfassen. Je weiter hierbei das Bauteil aufgerichtet wird, je mehr verkürzt sich eine Gesamtlänge der Transportvorrichtung zusammen mit dem zu transportierenden Bauteil, wodurch ein Durchfahren engerer Kurven mit einem entsprechend kleineren Radius möglich wird. Je nach den jeweils herrschenden Bedingungen, die beispielsweise die genaue Ausgestaltung der Transportvorrichtung, das zu transportierende Bauteil, aber auch den Transportweg und die herrschenden Umweltbedingungen umfassen können, kann es gegebenenfalls sinnvoll sein, den genannten Aufrichtwinkel auch zu beschränken. So kann es gegebenenfalls sinnvoll sein, gegebenenfalls abgesehen von einem Zielort des Transportwegs, an dem dieser endet, und gegebenenfalls abgesehen von einem Startort des Transportwegs, an dem dieser beginnt, eine Aufrichtung des Bauteils auf höchstens 60°, höchstens 45°, höchstens 30°, höchstens 20°, höchstens 15° oder höchstens 10° zu beschränken. So kann beispielsweise eine Aufrichtung über einen von den jeweiligen Bedingungen abhängigen Wert gegebenenfalls nur noch zu einer unmaßgeblichen Verkleinerung des durchfahrbaren Kurvenradius führen, während andere Parameter in der entsprechenden Phase stark nachteilig beeinflusst werden. Zu den oben genannten Umweltbedingungen können so beispielsweise die herrschenden Windverhältnisse, also beispielsweise die herrschende Windgeschwindigkeit und/oder die Windrichtung sowie die Böigkeit zählen, die ein weiteres Aufrichten aufgrund der mit steigendem Abstand zur Oberfläche tendenziell zunehmenden Windgeschwindigkeit unattraktiv erscheinen lassen.

Ergänzend oder alternativ kann ein Verfahren ferner ein Erfassen von wenigstens einem einen Fahrzustand anzeigenden Wert und ein Bereitstellen eines Alarmsignals umfassen, wenn der wenigstens eine erfasste Wert ein Überschreiten eines Sicherheitskriteriums anzeigt. Durch ein entsprechendes Überwachen wenigstens eines den Fahrzustand anzeigenden Werts kann so der Fahrer der Transportvorrichtung frühzeitig vor dem Auftreten einer für den Transport erheblichen Gefahr gewarnt werden. Das Alarmsignal kann beispielsweise dem Fahrer in Form einer optischen Warnanzeige, beispielsweise durch Einblenden einer Meldung, durch Aufleuchten einer entsprechenden Warnleuchte oder einer anderen entsprechenden optischen Warnanzeige bekanntgegeben werden. Ergänzend oder alternativ kann das Alarmsignal auch in eine akustische Warnung, beispielsweise einen Ton, oder auch eine gesprochene Warnmeldung umgesetzt werden. Ebenso kann gegebenenfalls eine mechanische Warnung beispielsweise in Form einer in einer Lenkung eingespeisten mechanischen Vibration verwendet werden. Hierbei sind beispielsweise unterschiedliche Warnstufen möglich, die ausgelöst werden, wenn unterschiedliche Sicherheitskriterien überschritten werden, die beispielsweise unterschiedlichen Gefährdungsgraden entsprechen können. So kann beispielsweise zu Beginn eine einfache Warnmeldung erscheinen, die bei einer höheren Warnstufe durch eine akustische Meldung und gegebenenfalls bei einer noch höheren Warnstufe durch eine mechanische Warnmeldung unterstützt wird.

Bei einem solchen Verfahren kann das Sicherheitskriterium überschritten sein, wenn ein Neigungswinkel der Transportvorrichtung entlang einer Hauptbewegungsrichtung gegenüber einer Bewegung in der Ebene 20° überschreitet, ein Neigungswinkel der Transportvorrichtung senkrecht zu der Hauptbewegungsrichtung in der horizontalen Ebene gegenüber einer Bewegung in der Ebene 15° überschreitet und/oder wenn eine Fahrgeschwindigkeit der Transportvorrichtung in Abhängigkeit von einer herrschenden Windgeschwindigkeit und Windrichtung eine Sicherheitsgrenze überschreitet. Anstelle der zuvor genannten Werte von 20° und 15° können auch unabhängig voneinander kleinere Werte, beispielsweise 15°, 10°, 8° oder auch 5° je nach zu transportierendem Bauteil, Transportvorrichtung, Transportweg und herrschenden Umweltbedingungen verwendet werden. Ein Überschreiten eines Winkels um einen vorbestimmten Wert α, wobei α eine nicht negative reelle Zahl ist (α ≥ 0), umfasst hierbei sowohl Winkel ϕ, die größer sind als der positive Wert α (ϕ > α), aber auch solche Winkel ϕ, die kleiner sind als der entsprechende negative Wert (-α) (ϕ < -α).

Ergänzend oder alternativ kann ein Verfahren ferner ein Erfassen der herrschenden Windgeschwindigkeit und/oder Windrichtung sowie ein Verdrehen des Bauteils um eine von der ersten Drehachse abweichenden zweiten Drehachse umfassen, um aerodynamische Kräfte zu reduzieren, die auf das Bauteil einwirken. Hierdurch kann es möglich sein, die zuvor genannten Sicherheitskriterien bei höheren Werten ansetzen zu können und so sicher einen Transport des Bauteils auch bei höheren Windgeschwindigkeiten zu ermöglichen. Hierdurch kann es so gegebenenfalls möglich sein, den Transportweg in einer kürzeren Zeit zurücklegen zu können.

Ergänzend oder alternativ kann ein Verfahren auch ein Befestigen des Bauteils an der Bauteilaufnahme umfassen.

Ein Verfahren zum Erstellen eines Routenplans zum Transportieren eines bezogen auf eine Haupterstreckungsrichtung länglichen Bauteils mittels einer Transportvorrichtung, wie diese zuvor beschrieben wurde, umfasst ein Erfassen einer geplanten Route, ein Bestimmen der notwendigen Anstellwinkel in Abhängigkeit des zu transportierenden Bauteils und der geplanten Route, und ein Bereitstellen von Steuerdaten für die Transportvorrichtung basierend auf den bestimmten Anstellwinkeln. Die Steuerdaten können so beispielsweise Steuersignale darstellen, mit deren Hilfe Aktuatoren, beispielsweise der Anhebevorrichtung, des Festlagers oder anderer Komponenten angesteuert werden können. Diese können beispielsweise digital gespeichert werden und in Abhängigkeit von einer Position der Transportvorrichtung entlang des Transportwegs abgerufen werden.

Beispiele umfassen ferner ein Steuergerät, welches ausgebildet ist, wenigstens ein Verfahren auszuführen, wie dies zuvor beschrieben wurde. Zu diesem Zweck kann beispielsweise das Steuergerät die Steuerdaten entgegennehmen und in Abhängigkeit von einer Position der Transportvorrichtung entlang des Transportwegs entsprechende Steuersignale für die bereits zuvor genannten Aktuatoren und Komponenten der Transportvorrichtung erstellen. Das Steuergerät kann hierbei selbst Teil der Transportvorrichtung, jedoch auch ein separates Modul oder eine in einem anderen Fahrzeug integrierte Komponente darstellen. Grundsätzlich kann auch eine Kombination der vorgenannten Möglichkeiten implementiert werden, wenn einzelne Funktionen auf mehrere elektronische Systeme verteilt werden.

Beispiele umfassen ferner ein Programm bzw. Computerprogrammprodukt mit einem Programmcode zum Durchführen eines der Verfahren, wenn das Programm auf einer programmierbaren Hardwarekomponente abläuft. Eine solche programmierbare Hardwarekomponente kann beispielsweise ein Prozessor oder weiter unten noch näher beschriebene andere Komponenten umfassen, die beispielsweise auch im Rahmen eines oder mehrerer Steuergeräte umfasst sein können.

Nachfolgend werden unter Bezugnahme auf die beiliegenden Figuren Beispiele näher beschrieben und erläutert.
- Fig. 1: zeigt eine schematische Darstellung einer Transportvorrichtung mit einem länglichen Bauteil in einer horizontalen Position;
- Fig. 2: zeigt die in Fig. 1 gezeigte Transportvorrichtung mit dem länglichen Bauteil in einer aufgerichteten, vertikalen Position;
- Fig. 3: zeigt eine Vergrößerung eines Gelenks einer Anhebevorrichtung der Transportvorrichtung aus den Fig. 1 und 2;
- Fig. 4: zeigt eine Querschnittsdarstellung durch eine Bauteilaufnahme der Transportvorrichtung, die über ein Festlager mit der Anhebevorrichtung verdrehbar gekoppelt ist;
- Fig. 5: zeigt eine vergrößerte Darstellung des Festlagers aus Fig. 4;
- Fig. 6: zeigt ein Flussdiagramm eines Verfahrens zum Transportieren eines länglichen Bauteils; und
- Fig. 7: zeigt ein Flussdiagramm eines Verfahrens zum Erstellen eines Routenplans zum Transportieren eines länglichen Bauteils.

Einige Beispiele werden nun unter Bezugnahme auf die beiliegenden Figuren näher beschrieben. In den Figuren können die Dickenabmessungen von Linien, Bereichen, Schichten und/oder Regionen um der Deutlichkeit Willen übertrieben dargestellt sein.

Bei der nachfolgenden Beschreibung der beigefügten Figuren, die lediglich einige exemplarische Beispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Beispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Beispiele auf verschiedene Weise modifiziert und abgeändert werden können, werden nur einige Beispiele in den Figuren und in der vorliegenden Beschreibung ausführlich dargestellt. Es sei jedoch klargestellt, dass nicht beabsichtigt ist, Beispiele auf die jeweils offenbarten Formen zu beschränken, sondern dass Beispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente, wie zuvor erläutert wurde.

In vielen Bereichen des Bauwesens, also beispielsweise dem Tiefbauwesen, dem Hochbauwesen sowie dem Anlagen- und Systembau, werden häufig längliche Bauteile benötigt, die von dem Ort ihrer Herstellung bis zu dem Ort ihrer späteren Verwendung transportiert werden müssen. Beispiele kommen aus nahezu allen Bauwerkskategorien und Funktionen, wie beispielsweise Verkehrsbauwerke, Industriebauwerke, Versorgungsbauwerke, Entsorgungsbauwerke, Wasserbauwerke und Sportbauwerke, um nur einige Beispiele zu nennen. Hinzu kommen Anlagen und Systeme, die beispielsweise dem Maschinenbau und der Elektrotechnik, jedoch auch der Verfahrenstechnik oder anderen Teilgebieten der Technik zuzuordnen sind. Zwei Beispiele stellen so Turmsegmente und Rotorblätter für Windenergieanlagen dar. Beispiele für entsprechende längliche Bauteile sind jedoch bei weitem nicht auf die vorgenannten Beispiele beschränkt. Neben den schon genannten Beispielen können so auch Antriebs- oder strukturelle Komponenten von Flugzeugen, Schiffen oder dergleichen betroffen sein, um nur ein paar Beispiele zu nennen.

Längliche Bauteile weisen häufig bezogen auf eine Haupterstreckungsrichtung eine Erstreckung oder Abmessung auf, die deutlich größer ist als eine entsprechende Abmessung entlang einer Nebenerstreckungsrichtung. Neben der Haupterstreckungsrichtung existieren so zwei Nebenerstreckungsrichtungen, die zusammen mit der Haupterstreckungsrichtung linear unabhängig sind und so die Basis eines dreidimensionalen Koordinatensystems bilden. Das längliche Bauteil weist hierbei, wie bereits erwähnt, entlang der Haupterstreckungsrichtung eine Ausdehnung auf, die deutlich größer ist, als entlang der anderen beiden Nebenerstreckungsrichtungen, also beispielsweise wenigstens ein 2-Faches, wenigstens ein 5-Faches, wenigstens ein 10-Faches oder sogar wenigstens ein 20-Faches. Die Haupterstreckungsrichtung und die beiden Nebenerstreckungsrichtungen können beispielsweise rechtwinklig aufeinander stehen und so die Basis eines globalen kartesischen bzw. globalen rechtwinkligen Koordinatensystems bilden. Im Unterschied zu einem lokalen Koordinatensystem, bei dem die Richtungen der betreffenden Basisvektoren von dem Ort des betrachteten Punktes abhängen können, wie dies beispielsweise bei Zylinderkoordinaten oder Kugelkoordinaten der Fall ist, können die Haupterstreckungsrichtung und die beiden Nebenerstreckungsrichtungen gerade nicht von dem betreffenden Ort abhängen, sondern können global einheitlich sein.

Die Haupterstreckungsrichtung muss hierbei jedoch bei weiterem nicht im Inneren des länglichen Bauteils verlaufen. So weist das längliche Bauteil bezogen auf die Haupterstreckungsrichtung ein erstes und ein zweites Ende auf, welche das Bauteil bezogen auf die Koordinate entlang der Haupterstreckungsrichtung begrenzen. Beginnt bzw. schneidet die Haupterstreckungsrichtung beispielsweise das erste Ende des Bauteils, bedeutet dies bei weitem nicht, dass die Haupterstreckungsrichtung vollständig im Inneren des Bauteils verlaufen muss und daher auch das zweite Ende schneiden muss bzw. an diesem enden muss. Vielmehr kann das Bauteil Öffnungen, Biegungen oder andere formgebende Elemente und Strukturen aufweisen, sodass die an dem ersten Ende beginnende Haupterstreckungsrichtung die Oberfläche des Bauteils an einem anderen Ende als dem zweiten Ende schneidet und beispielsweise den weiteren Weg oder zumindest teilweise außerhalb des Bauteils verläuft. Selbstverständlich kann die Haupterstreckungsrichtung die Oberfläche des Bauteils auch wiederum schneiden, sodass diese wiederum in das Innere des Bauteils übertritt. Auch wenn die Haupterstreckungsrichtung, die das erste Ende schneidet bzw. an diesem beginnt, bei weitem das zweite Ende nicht schneiden muss, kann dies jedoch bei vielen Bauteilen durchaus der Fall sein. Hierfür können beispielsweise vollständig rotationssymmetrische oder auch teilweise rotationssymmetrische Bauteile dienen, deren Symmetrieachse in einem solchen Fall mit der Haupterstreckungsrichtung zusammenfallen kann.

Bei komplexer geformten Bauteilen kann jedoch beispielsweise aufgrund einer Krümmung oder anderen gekrümmten Strukturen beispielsweise im Bereich eines der Enden des Bauteils, die Haupterstreckungsrichtung auch das betreffende zweite Ende des Bauteils gerade nicht schneiden. Beispiele können Winglets an Rotorblättern oder Rotorflügeln darstellen, um nur ein Beispiel zu nennen.

Beim Transport solcher länglicher Bauteile tritt sehr häufig die Herausforderung auf, dass diese wenigstens teilweise über Land transportiert werden müssen, wo beispielsweise Höhenbegrenzungen beim Transport zu beachten sein können. Werden beispielsweise entsprechende Bauteile im Rahmen des Überlandtransports auf Straßen transportiert, kann sich so eine Höhenbegrenzung im Bereich zwischen 4,0 bis 4,4 Metern auf europäischen Straßen ergeben, die beispielsweise eine Folge von Brücken- oder Tunneldurchfahrten sein können. Bei Windenergieanlagen werden heute häufig Rotorblätter mit Rotorblattlängen im Bereich von mehreren Zehnmetern, beispielsweise von mehr als 50 Metern, und Massen im Bereich einiger Tonnen bis einiger Zehntonnen, beispielsweise im Bereich zwischen 10 und 20 Tonnen, auch zur Erschließung von Binnenlandstandorten verwendet. Aufgrund der zuvor genannten Höhenbegrenzungen werden diese konventionell in der Regel liegend, also waagerecht transportiert. Steht hierbei das betreffende Transportfahrzeug waagerecht, kann so das betreffende Bauteil, also das Rotorblatt, im Wesentlichen horizontal orientiert sein. Eine horizontale Orientierung ist hierbei eine solche, die im Wesentlichen senkrecht zu der Schwerebeschleunigung liegt. Im Unterschied hierzu wirkt die Schwerkraft gerade häufig im Wesentlichen vertikal und legt so die vertikale Richtung zumindest in der Ebene fest.

Die vorangegangenen Erläuterungen gelten ebenso für Turmbauteile für Windenergieanlagen, deren Auslegung gerade so erfolgt, dass die zuvor genannten Höhenbegrenzungen beim Transport eingehalten werden können. Ihre Länge liegt häufig im Bereich zwischen 10 und 30 Meter, während ihre Masse Werte jenseits von 40 Tonnen annehmen kann.

Auch wenn viele dieser Bauteile eine gewisse Elastizität oder Flexibilität aufweisen, sind diese im Hinblick auf den Transport jedoch häufig als starre Bauteile anzusehen, sodass im Falle eines liegenden Transports die Länge des Transportfahrzeugs zusammen mit dem betreffenden Bauteil die minimalen Kurvenradien definiert, die das entsprechende Transportfahrzeug durchfahren kann. Die minimalen Kurvenradien gerade im Bereich großer Bauteile können jedoch reduziert werden, wenn der Transport aufrecht oder zumindest geneigt erfolgt. Dazu kann beispielsweise das Rotorblatt im Wesentlichen an seiner Wurzel bzw. seinem Flansch festgehalten werden und beispielsweise durch entsprechende Gegengewichte gestützt werden. So kann dieses durch eine entsprechende Einspannung, beispielsweise durch eine Verschraubung oder auch eine Verklemmung, an einem Ende des Bauteils gegen translatorische Bewegungen gesichert werden. Im Falle eines Rotorblatts kann dies beispielsweise an dem zuvor genannten Flansch, jedoch auch an einem entsprechenden Flansch eines Turmbauteils erfolgen. Die Einspannung ist in einem solchen Fall mit mindestens einer Komponente des Fahrzeugs verbunden. Entsprechend kann dann eine Vorrichtung implementiert werden, mit der das Bauteil um mindestens eine Achse gedreht bzw. geschwenkt werden kann, um dieses aufzurichten oder anzustellen.

Eine Kombination einer solchen Einspannung und einer entsprechenden Drehvorrichtung zum Aufrichten oder Anstellen kann so beispielsweise ein Festlager darstellen, welches typischerweise alle Translationsbewegungen des gelagerten Körpers unterbindet, jedoch eine Verdrehbarkeit um wenigstens eine Achse ermöglicht, sodass das Festlager bezogen auf diese wenigstens eine Achse keine oder zumindest signifikant keine Momente übertragen und somit selbst aufnehmen kann. Ein Festlager kann so ein Verdrehen oder Verschwenken des betreffenden gelagerten Körpers um wenigstens eine Drehachse ermöglichen, während jedoch lineare, translatorische Bewegungen durch das Festlager unterbunden bzw. entsprechende Kräfte übertragen werden. Im Unterschied hierzu ermöglicht ein Loslager bezüglich wenigstens einer Translationsrichtung auch eine entsprechende Translationsbewegung. Durch eine entsprechende Kombination eines Loslagers und eines Festlagers kann so eine statische Bestimmtheit eines entsprechenden Körpers ermöglicht werden.

Ein Anstellen oder Aufrichten kann so über ein Festlager realisiert werden, wobei die Krafteinbringung ebenfalls an diesem Festlager, aber auch durch andere Mechanismen erfolgen kann. Aufgrund der hierbei auftretenden Massen und der Ausdehnung solcher Bauteile können hierbei zum Teil sehr große Haltekräfte und Momente auftreten. Um diese zu reduzieren kann daher das Bauteil beispielsweise zusätzlich abgestützt oder ein entsprechendes Gegengewicht verwendet werden.

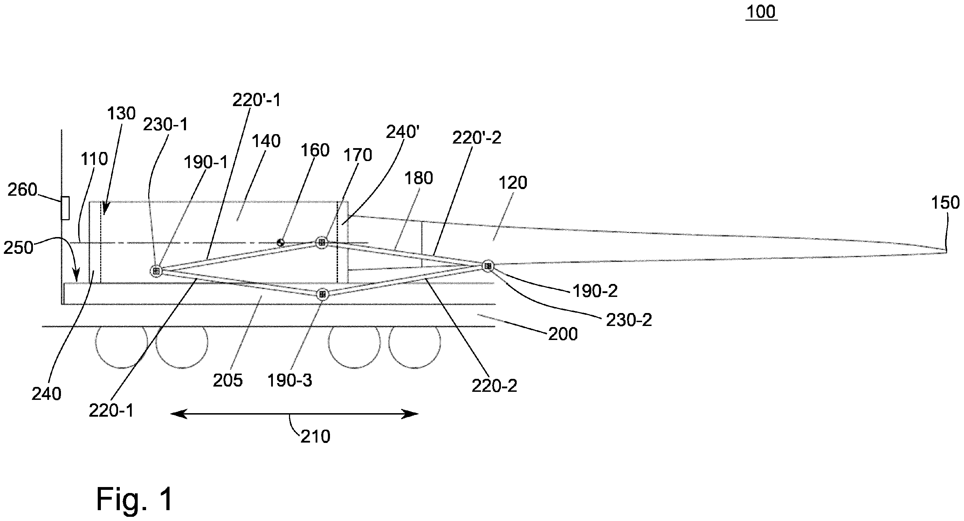

Fig. 1 zeigt eine vereinfachte Darstellung einer Transportvorrichtung 100 zum Transportieren eines bezogen auf eine Haupterstreckungsrichtung 110 länglichen Bauteils 120, bei dem es sich in dem hier gezeigten Beispiel um ein Rotorblatt einer Windenergieanlage handelt. Das Bauteil 120 weist hierbei ein erstes Ende 130 auf, welches im Inneren einer Bauteilaufnahme 140 angeordnet ist. Die Bauteilaufnahme wird auch als Lagerungsvorrichtung bezeichnet.

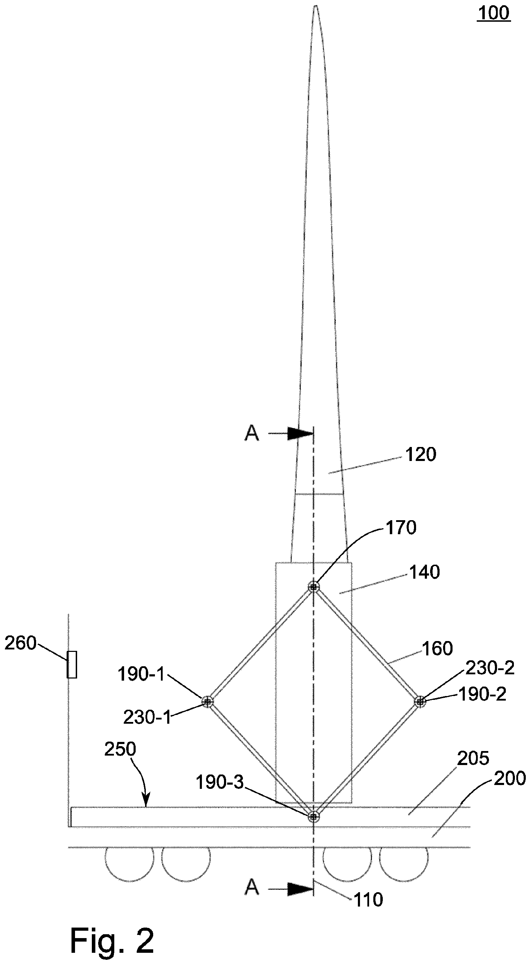

Das Bauteil 120 weist darüber hinaus ein zweites Ende 150 auf, welches bei dem hier gezeigten Bauteil 120 gerade nicht auf der verlängerten Haupterstreckungsrichtung 110 liegt. Ein in Fig. 1 nicht angezeichneter Schwerpunkt des Bauteils 120 liegt hierbei jedoch näher an dem ersten Ende 130 als an dem zweiten Ende 150. Zusammen mit der Bauteilaufnahme 140 weist so das Bauteil 120 einen gemeinsamen Schwerpunkt 160 auf, der zwischen dem ersten Ende 130 und einem als Gelenk dienenden Festlager 170 angeordnet ist. Der gemeinsame Schwerpunkt 160 liegt bei dem hier gezeigten Beispiel auf der Haupterstreckungsrichtung 110, die auch die Längserstreckung der Bauteilaufnahme 140 darstellt. Bei anderen Ausgestaltungen der Transportvorrichtung 100 und/oder des Bauteils 120 kann hier selbstverständlich auch eine bezogen auf eine Komponente senkrecht zu der Haupterstreckungsrichtung abweichende Lage des gemeinsamen Schwerpunkts 160 auftreten, auch wenn diese gegebenenfalls durch Anbringen von Zusatzgewichten gegebenenfalls reduziert werden sollte. Dies wird noch näher im Zusammenhang mit Fig. 2 erläutert.

Die Transportvorrichtung 100 weist ferner eine auch als Hubvorrichtung bezeichnete Anhebevorrichtung 180 auf, die über das Festlager 170 mit der Bauteilaufnahme 140 derart gekoppelt ist, dass die Bauteilaufnahme 140 um eine erste Drehachse, die senkrecht auf der in Fig. 1 gezeigten Darstellungsebene steht, verschwenkbar ist. Wird nun durch die Anhebevorrichtung 180 das Festlager 170 wenigstens in einer vertikalen Richtung, also mit wenigstens in einer vertikalen Richtungskomponente, also in Fig. 1 beispielsweise nach oben bewegt, so folgt die Bauteilaufnahme 140 an dem Punkt des Festlagers 170 dieser Bewegung. Da das Festlager 170 grundsätzlich eine Drehbewegung ermöglichen kann, sofern diese nicht durch andere technische Maßnahmen, wie beispielsweise eine Arretierung, einen Motor oder einen anderen Aktuator unterbunden wird, wird aufgrund der zuvor beschriebenen Lage des gemeinsamen Schwerpunkts 160 hier eine Aufrichtung des Bauteils 120 zusammen mit der Bauteilaufnahme 140 erfolgen. Dies wird im Zusammenhang mit Fig. 2 noch näher erläutert.

Die Bauteilaufnahme 140 weist hierbei eine in Fig. 1 nicht dargestellte Befestigung auf, über die das Bauteil 120 an der Bauteilaufnahme 140 befestigt werden kann. Hierbei kann die Befestigung das Bauteil 120 gerade so mit der Bauteilaufnahme verbinden, dass das Bauteil 120 translatorisch fest mit der Bauteilaufnahme 140 verbunden ist. Hinsichtlich linearer Bewegungen ist so über die in Fig. 1 nicht gezeigte Befestigung das Bauteil 120 an der Bauteilaufnahme 140 starr fixierbar. Wie die nachfolgende Erörterung jedoch noch zeigen wird, kann die Befestigung beispielsweise Drehbewegungen um eine Drehachse ermöglichen.

Die Anhebevorrichtung 180 ist im vorliegenden Beispiel der Fig. 1 als Scherenhubvorrichtung ausgestaltet und weist so neben dem als Gelenk dienenden Festlager 170 weitere Gelenke 190-1, 190-2, 190-3 auf. Das Gelenk 190-3 ist hierbei mit einem Transportfahrzeug 200 derart gekoppelt bzw. verbunden, dass das Gelenk 190-3 ortsfest mit dem Transportfahrzeug verbunden ist. Im vorliegenden Fall ist so die Transportvorrichtung 100 integral mit dem Transportfahrzeug ausgebildet, bei dem es sich beispielsweise um einen Anhänger oder einen Waggon für ein anderes Fahrzeug, jedoch auch um ein selbst angetriebenes Fahrzeug handeln kann. So kann das Fahrzeug beispielsweise ein Fahrzeug für den Straßenverkehr, ein geländegängiges Fahrzeug, also etwa eine Baumaschine, oder auch ein Schienenfahrzeug sein. Handelt es sich bei dem Transportfahrzeug 200 entsprechend um einen Anhänger, kann es sich so um einen straßentauglichen, geländetauglichen oder schienentauglichen Anhänger, also beispielsweise einen Waggon handeln, je nachdem auf welche Art und Weise das Bauteil 120 transportiert werden soll.

Darüber hinaus kann die Transportvorrichtung 100 auch als separate, mit einem der vorgenannten Fahrzeuge oder einem der vorgenannten Anhänger koppelbare Einheit ausgestaltet sein. So kann beispielsweise die Transportvorrichtung 100 eine Fixierung 205 aufweisen, über die die Transportvorrichtung 100 auf dem Transportfahrzeug 200 gelagert und fixiert werden kann. Ist so eine entsprechende Fixierung 205 vorgesehen, kann das Gelenk 190-3 beispielsweise auch mit dieser entsprechend verbunden sein. Die Fixierung 205, mit der die Anhebevorrichtung 180 in einem solchen Fall verbunden sein kann, kann so einen Unterbau bilden, der auf das Transportfahrzeug aufgesetzt werden kann. Über die Fixierung 205 kann so die Transportvorrichtung beispielsweise auf einem Fahrzeug oder einem Anhänger montiert werden.

Aufgrund der Ausgestaltung der Anhebevorrichtung 180 als Scherenhubvorrichtung, weist diese ausgehend von dem Gelenk 190-3 entlang einer Hauptbewegungs-Haupttransportrichtung 210 zu beiden Seiten jeweils ein Paar von Scherenarmen 220 auf, zwischen denen jeweils eines der Gelenke 190-1 und 190-2 liegt.

Genauer gesagt weist die Scherenhubvorrichtung ein erstes Scherenarmpaar 220-1, 220'-1 sowie ein zweites Scherenarmpaar 220-2, 220'-2 auf. Zwischen den beiden Scherenarmen 220-1, 220'-1 liegt das Gelenk 190-1, während zwischen den beiden anderen Scherenarmen 220-2, 220'-2 das Gelenk 190-2 angeordnet ist. Die beiden Scherenarme 220-1 und 220-2 sind über das Gelenk 190-3 mit dem Transportfahrzeug 200 verbunden, während die beiden anderen Scherenarme 220'-1, 220'-2 mit dem Festlager 170 verbunden sind.

Um nun ein Anheben des Festlagers 170 und damit der Bauteilaufnahme 140 zu ermöglichen, weist die in Fig. 1 gezeigte Anhebevorrichtung 180 an den beiden Gelenken 190-1, 190-2 jeweils eine Einrichtung zur Höhenverstellbarkeit der Anhebevorrichtung 180 auf. So weisen bei dem hier gezeigten Beispiel die Gelenke 190-1, 190-2 jeweils einen Motor 230-1, 230-2 auf, über den die Scherenarme 220-1, 220'-1 und 220-2, 220'-2 gespreizt oder auch kontrolliert zusammengeschwenkt werden können. Die Motoren 230 können beispielsweise elektrisch betrieben sein. Selbstverständlich können anstelle der Motoren 230 auch andere pneumatische oder hydraulische Aktuatoren verwendet werden. Auch ist grundsätzlich eine Kombination möglich, wenn beispielsweise das Transportfahrzeug 200 im Zusammenhang mit unterschiedlichen Fahrzeugen betrieben werden soll oder um andere Randbedingungen zu erfüllen.

Fig. 1 zeigt die Transportvorrichtung 100 von einer Seite. Selbstverständlich kann die Anhebevorrichtung 180 beispielsweise auch auf der in Fig. 1 der dort gezeigten Anhebevorrichtung 180 abgewandten Seite des Bauteils 120 eine entsprechende Scherenhubvorrichtung aufweisen. Ebenso können selbstverständlich anstelle der beiden Motoren 230 an den beiden Gelenken 190-2, 190-1 auch eine andere Anzahl von Motoren oder Aktuatoren verwendet werden, die beispielsweise als Teil des Festlagers 170 oder auch als Teil des Gelenks 190-3 ausgeführt sein können. Selbstverständlich können auch andere Anhebemechanismen implementiert werden, wie beispielsweise Teleskopzylinder, die an einen oder mehrere der entsprechenden Scherenarme 220 angreifen.

Anstelle der Scherenhubvorrichtung, wie sie in Fig. 1 gezeigt ist, können auch andere Anhebevorrichtungen 180 verwendet werden, wie beispielsweise eine Gelenkgabel, ein einseitiges Gelenk oder auch andere elektrische, hydraulische oder pneumatische Hebeführungen. Die Hubvorrichtung ermöglicht so eine Drehung der Bauteilaufnahme 140 um die in Fig. 1 horizontale Achse, die auch als erste Drehachse bezeichnet wird. Das Festlager 170 kann hierbei als Gleitlager, beispielsweise basierend auf einer Festkörperreibung oder auch einer Flüssigkeitsreibung sowie einer Mischreibung oder auch auf Basis eines Wälzlagers oder auch als Magnetlager umgesetzt werden. Der Führungsbereich 250 kann also beispielsweise ein Gleitlager oder auch eine Führungsschiene für eine Bewegung des unteren Endes des Bauteils 120 in der Bauteilaufnahme 140 aufweisen. Je nach konkreter Ausgestaltung kann der Führungsbereich 250 beispielsweise als Teil des Transportfahrzeugs 200, der Fixierung 205 oder auch einer anderen Komponente der Transportvorrichtung 100 ausgestaltet sein. Die Transportvorrichtung 100 kann so beispielsweise in der Lage sein, um bei dem wenigstens teilweise oder vollständigen Aufrichten des Bauteils 120 in der Ebene durch ein Bewegen des Festlagers 170 wenigstens in vertikaler Richtung die Bauteilaufnahme 140 im Wesentlichen horizontal zu führen.

Auch kann, wie erwähnt, das Festlager 170 einen eigenständigen Antrieb zum Aufrichten aufweisen, wie beispielsweise einen Motor 230 oder einen anderen entsprechenden Aktuator. Ergänzend können das Festlager 170 sowie die anderen Gelenke 190 ebenso eine mechanische Arretierung aufweisen, die beispielsweise zur Fixierung der Bauteilaufnahme 140 und des darin befestigten Bauteils 120 dienen kann, um beispielsweise den oder die Motoren 230 oder die entsprechenden Aktuatoren ausschalten zu können.

Über eine solche Arretierung kann dann beispielsweise die Drehverbindung über die erste Drehachse zu der Anhebevorrichtung 180 während der Zeit, in der die Arretierung aktiviert ist, starr ausgestaltet sein. Hierdurch kann es möglich sein, einen entsprechenden Motor oder auch einen entsprechenden Aktuator auszuschalten. Die Arretierung kann hierbei selbstverständlich lösbar ausgestaltet sein, sodass das Festlager 170 wieder in der Lage ist, die Bauteilaufnahme 140 und damit das Bauteil 120 frei in Bezug auf Drehmomente um die erste Drehachse zu führen.

Die Anhebevorrichtung 130 kann so auch als Haltevorrichtung für die Bauteilaufnahme 140 und das Bauteil 120 dienen. Sie ermöglicht die Höhenverstellung des Bauteils 120 zusammen mit der Bauteilaufnahme 140 und kann so aufgrund der Anordnung des gemeinsamen Schwerpunkts 160 der beiden vorgenannten Bauteile ebenso ein Verkippen und damit ein Aufrichten derselben bewirken.

Die Fixierung 205 kann hierbei beispielsweise als Zwischenelement zur Montage der Anhebevorrichtung 180 auf den Transportfahrzeug 200 dienen, soweit dies nötig ist. Das Transportfahrzeug 200 kann, wie erwähnt, ein maschinell angetriebenes Fahrzeug für Landtransporte sein, also beispielsweise für einen Straßentransport oder einen Bahntransport. Sie kann jedoch auch gezogen oder geschoben werden und so beispielsweise mit einem entsprechenden Zug- oder Schubsystem verbunden werden. Die Transportvorrichtung 100 bzw. das Transportfahrzeug 200 kann so beispielsweise als Anhänger implementiert werden. Grundsätzlich ist auch eine Verbindung zu dem ziehenden oder schiebenden Fahrzeug über das Bauelement 120 selbst möglich, wenn dieses in einem liegenden Zustand, als in horizontaler Ausrichtung transportiert wird.

Das Transportfahrzeug 200 kann darüber hinaus auch einen oder mehrere in Fig. 1 nicht gezeigte weitere Lagepunkte für das Bauteil 120 in liegender Position aufweisen. Diese können beispielsweise in Form von Gleitlagern, Magnetlagern oder Führungsschienen umgesetzt sein, um beispielsweise eine Beschädigung des Bauteils 120 aufgrund von Vibrationen, Durchbiegungen oder anderen mechanischen Effekten unwahrscheinlich zu machen.

Die mechanische Verbindung zwischen dem Festlager 170 und der Bauteilaufnahme kann beispielsweise mehrfach lösbar und wiederverbindbar ausgestaltet sein. Hierdurch kann es möglich sein, die Bauteilaufnahme separat mit dem Bauteil 120 zu verbinden und beide gemeinsam mit der Anhebevorrichtung 180 zu koppeln. Dies kann eine leichtere Montage des Bauteils 120 in der Transportvorrichtung 100 ermöglichen, wenn die Bauteilaufnahme 140 beispielsweise weniger empfindlich hinsichtlich ihrer Oberfläche oder anderer Parameter ist, als das Bauteil 120. So kann die Bauteilaufnahme 140 beispielsweise Ösen oder andere Haltestrukturen aufweisen, mit deren Hilfe die Bauteilaufnahme 140 beispielsweise mittels eines Krans eines oder mehrerer Gabelstapler oder anderer entsprechenden Systeme aufgerichtet oder anderweitig zur Montage an der Transportvorrichtung 100 und ihre Anhebevorrichtung 180 vorbereitet werden kann.

Die Bauteilaufnahme 140 kann darüber hinaus auch modular aufgebaut sein. Sie kann so beispielsweise auf Basis einer Gitterkonstruktion oder auch in Halbschalenbauweise ausgestaltet sein.

Die Verwendung der Bauteilaufnahme 140, die über das Festlager 170 mit der Anhebevorrichtung 180 gekoppelt ist, ermöglicht es nun im Zusammenspiel mit der bereits beschriebenen Lage des gemeinsamen Schwerpunkts 160, das Bauteil 120 nicht etwa an seinem Flansch aufrichten zu müssen, sondern durch Drehung um die erste Drehachse, welche senkrecht zu der in Fig. 1 gezeigten Darstellungsebene das Festlager 170 verläuft. Die Lage des gemeinsamen Schwerpunkts 160 zwischen dem in Fig. 1 nur angedeuteten ersten Ende 130 des Bauteils 120 und dem Festlager 170 führt so, sofern das Festlager 170 nicht arretiert oder auf andere Art und Weise an einem Verdrehen gehindert ist, zu einem aufrichtenden Drehmoment, welches das Bauteil 120 aufzurichten vermag. Die durch das Festlager 170 festgelegte erste Drehachse, um die die Bauteilaufnahme 140 verschwenkt wird, verläuft so oberhalb des gemeinsamen Schwerpunkts 160 der Bauteilaufnahme 140 und des Bauteils 120. Hierdurch kann es möglich sein, die auftretenden Kräfte und Momente auf die Komponenten der Transportvorrichtung zu reduzieren. Die Transportvorrichtung 100 nutzt so die Tatsache, dass auftretende Momente im Prinzip zu Null werden, wenn das Bauteil 120 zusammen mit der Bauteilaufnahme 140 in ihrem gemeinsamen Schwerpunkt 160 gelagert wird. Die Lagerung ermöglicht hier ein Verdrehen, behindert jedoch die horizontale und vertikale Verschiebung, wie dies für ein Festlager typisch ist.

Um Sicherheitsreserven auch bei ungünstigen Transportbedingungen zur Verfügung zu haben und um auch verschiedene Bauteile 120, welche hinsichtlich ihrer Masse und einer Lage ihres Schwerpunkts im Rahmen vorbestimmter Spezifikationen liegen, transportieren zu können, wird so häufig der gemeinsame Schwerpunkt 160 nicht direkt in die Position des Festlagers 170 gelegt, sondern - wie beschrieben - zwischen das erste Ende 130 und das Festlager 170. So kann beispielsweise die Bauteilaufnahme 140 gerade so ausgestaltet sein, dass der gemeinsame Schwerpunkt 160 höchstens 10%, bevorzugt höchstens 5% einer Gesamtlänge des Bauteils 120 entlang der Haupterstreckungsrichtung 110 von dem Festlager 170 entfernt liegt.

Sollte dies nicht möglich sein, kann die Bauteilaufnahme 140 beispielsweise derart ausgestaltet sein, dass diese eine Befestigung 240 für wenigstens ein Zusatzgewicht aufweist, sodass durch das Anbringen des entsprechenden Zusatzgewichts der gemeinsame Schwerpunkt 160 entlang der Haupterstreckungsrichtung 110 des Bauteils 120 veränderbar ist. Weist also beispielsweise das Bauteil 120 eine Länge oder eine Massenverteilung auf, sodass bei einem Montieren des Bauteils 120 in der Bauteilaufnahme 140 der gemeinsame Schwerpunkt 160 nicht mehr zwischen dem ersten Ende 130 des Bauteils 120 und dem Festlager 170 bezogen auf die Haupterstreckungsrichtung 110 liegen würde, kann der gemeinsame Schwerpunkt 160 durch ein Verlagern des Schwerpunkts der Bauteilaufnahme 140 gegebenenfalls wieder in den zuvor genannten Bereich verschoben werden. Die Masse der Bauteilaufnahme und ihre Gewichtsverteilung kann so durch die Befestigung 240 und die an ihr befestigbaren Zusatzmassen verschoben werden. Hierdurch kann es gegebenenfalls möglich sein, die zuvor genannte vorbestimmte Spezifikation weiter zu fassen und so die Transportvorrichtung 100 auch für unterschiedlichere Bauteile 120 einzusetzen.

Sollte beispielsweise das Bauteil 120 aufgrund seiner Masseverteilung, seiner Ausdehnung oder anderer Parameter beispielsweise einen Schwerpunkt aufweisen, der sehr nah an dem ersten Ende 130 des Bauteils 120 liegt, kann ebenso durch eine weitere Befestigung 240' für ein entsprechendes weiteres Zusatzgewicht der Schwerpunkt gegebenenfalls auch näher an das Festlager 170 verlagert werden, selbst wenn dieses zuvor bereits zwischen dem ersten Ende 130 des Bauteils 120 und dem Festlager 170 gelegen hat. Die weitere Befestigung 240' kann so beispielsweise im Bereich einer Öffnung der Bauteilaufnahme 140 angeordnet sein, durch die das Bauteil 120 ragt, um einen Überstand des Bauteils 120 zu ermöglichen. Im Unterschied hierzu kann die in Fig. 1 gezeigte Befestigung 240 auch im Bereich des ersten Endes 130 und der dort integrierten, jedoch nicht gezeigten Befestigung für das Bauteil 120 angeordnet sein. Die Bauteilaufnahme 140 kann an dieser Stelle optional offen oder geschlossen sein. Die Bauteilaufnahme 140 kann so beispielsweise röhrenförmig, jedoch auch becherförmig sein. Sie ist somit mindestens an einer Seite offen, um so einen Überstand des Bauteils 120 zu ermöglichen, welches in der Regel größer ist. Neben den bereits zuvor genannten Ausgestaltungen der Bauteilaufnahme 140 als Gitter- oder Stangenkonstruktion kann so beispielsweise auch eine Konstruktion auf Basis von Rohrschellen oder ähnlichen Konstruktionen verwendet werden.

Fig. 2 zeigt eine schematische Darstellung der in Fig. 1 gezeigten Transportvorrichtung 100, wenn diese durch ein Aktivieren der Motoren 230-1, 230-2 an den beiden Gelenken 190-1, 190-2 das Festlager 170 zumindest entlang der vertikalen Richtung verfährt. Aufgrund der zuvor erläuterten Lage des gemeinsamen Schwerpunkts 160 tritt so ein aufrichtendes Drehmoment auf, welches grundsätzlich versucht, die Bauteilaufnahme 140 zusammen mit dem Bauteil 120 aufzurichten, wie dies in Fig. 2 auch gezeigt ist. Hierbei bieten sich grundsätzlich unterschiedliche Strategien an.

So kann das Festlager 170 bzw. die Transportvorrichtung 100 beispielsweise so ansteuerbar sein, dass wenigstens zeitweise bei dem Aufrichten des Bauteils 120 zumindest vor dem Erreichen der in Fig. 2 auch gezeigten vertikalen Position durch das bereits beschriebene Bewegen des Festlagers 170 wenigstens in vertikaler Richtung die Bauteilaufnahme 140 frei geführt wird. Die Bauteilaufnahme 140 kann so dem auf sie wirkenden Drehmoment nachgeben und stellt sich so bei dem Verfahren des Festlagers entlang der vertikalen Richtung auf. Um hier beispielsweise eine Führung der Bauteilaufnahme 140 bzw. des Bauteils 120 zu ermöglichen, kann die Transportvorrichtung 100 beispielsweise einen Führungsbereich 250 aufweisen, der gerade so angeordnet ist, sodass diese wenigstens zeitweise bei dem Aufrichten des Bauteils 120 mit dem Bauteil 120, der Bauteilaufnahme 140 oder beiden in Kontakt stehen kann. Der Führungsbereich 250 kann so beispielsweise Teil einer Magnetlagerung, einer Gleitlagerung der Bauteilaufnahme 140 bzw. des Bauteils 120 sein. Der Führungsbereich 250 kann so auch eine Abrollfläche und die Bauteilaufnahme 140 bzw. das Bauteil 120 wenigstens einen Wälzkörper aufweisen, die ihrerseits gerade so angeordnet sind, dass die Bauteilaufnahme 140 bzw. das Bauteil 120 an der Abrollfläche geführt wird. Der betreffende wenigstens eine Wälzkörper kann eine Rolle, eine Kugel, ein Rad oder eine beliebige Kombination derselben sein, um nur einige Beispiele zu nennen.

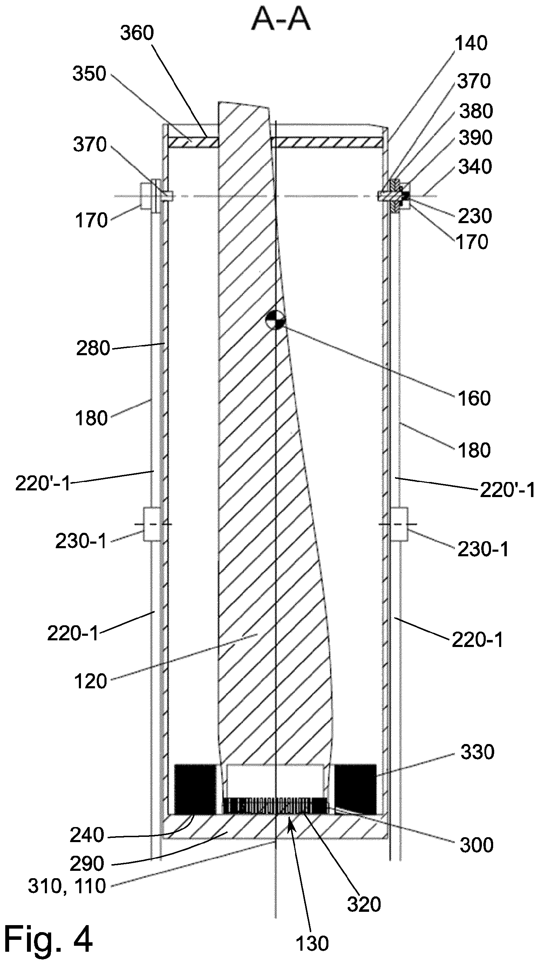

Die Bauteilaufnahme 140 nimmt so das Bauteil 120 mit seiner länglichen Form auf und ermöglicht die Lagerung über das Festlager 170 gegenüber der Gesamtkonstruktion. Wie im Zusammenhang mit Fig. 4 noch beschrieben werden wird, erfolgt hier die Befestigung des Bauteils 120 beispielsweise im Inneren, um so translatorische Bewegungen möglichst auszuschließen, wobei rotatorische Bewegungen jedoch eventuell möglich sind. Die Bauteilaufnahme kann dabei beispielsweise konstruktiv so ausgeführt sein, dass diese über den Führungsbereich 250 an wenigstens einer Seite gelagert oder gehalten wird. Über die in Fig. 1 auch angedeuteten Befestigungen 240 für die gegebenenfalls montierbaren und gegebenenfalls austauschbaren Zusatzgewichte kann so für verschiedene Bauteile 120 eine mit einem entsprechenden Austausch derselben einhergehende Schwerpunktsveränderung wenigstens teilweise, gegebenenfalls sogar vollständig kompensiert werden. Die Bauteilaufnahme 140 kann so über die Befestigungen 240 und entsprechende Zusatzgewichte gegebenenfalls an unterschiedliche Bauteile, ihre Geometrien, die Lagen ihrer Schwerpunkte und andere entsprechende Parameter angepasst werden. Der Führungsbereich 250 kann hierbei beim Aufrichten und/oder beim Absenken als Loslager dienen und so einen zweiten Lagerpunkt für das Bauteil 120 bzw. die Bauteilaufnahme 140 dienen. Der Führungsbereich 250 kann so beispielsweise eine Schiene, ein Magnetlager oder auch ein Gleitlager umfassen. Auf der Schiene können dann entsprechende Wälzkörper, beispielsweise Räder oder Rollen, abrollen und so das Bauteil 120 und die Bauteilaufnahme 140 führen.

Das Festlager 170 bzw. die Transportvorrichtung 100 kann jedoch auch in der Lage sein, wenigstens zeitweise bei dem Aufrichten des Bauteils 120 zumindest vor dem Erreichen der in Fig. 2 gezeigten vertikalen Position durch das bereits beschriebene Bewegen des Festlagers 170 wenigstens in vertikaler Richtung ausschließlich über das Festlager mit der Transportvorrichtung 100 verbunden zu sein. Dies kann beispielsweise durch eine entsprechende Arretierung oder auch durch eine entsprechende Ansteuerung der Motoren 230 oder der entsprechenden Aktuatoren der Transportvorrichtung erreicht werden.

Wird so die Bauteilaufnahme 140 wenigstens zeitweise vor einem vollständigen Aufrichten des Bauteils 120 ausschließlich über die Anhebevorrichtung 180 geführt, kann dies beispielsweise dadurch geschehen, dass das Festlager 170 durch Arretierung, Ansteuerung eines oder mehrerer Elektromotoren und/oder eines oder mehrerer Aktuatoren angehoben werden, ohne dass die Lage der Bauteilaufnahme 140 und des Bauteils 120 trotz des durch die Gewichtskraft auf diese einwirkenden Drehmoments verändert wird. Anders ausgedrückt kann zunächst das Bauteil 120 zusammen mit seiner Bauteilaufnahme 140 angehoben werden, bevor simultan oder nacheinander das Bauteil 120 zusammen mit seiner Bauteilaufnahme 140 weiterangehoben und hierbei gleichzeitig eine Verschwenkung des Bauteils 120 und der Bauteilaufnahme 140 um die erste Drehachse durch das Festlager 170 ermöglicht wird. Dies kann beispielsweise durch ein Aufheben der Arretierung mit einer entsprechenden Dämpfung der auftretenden Bewegung oder auch gesteuert oder geregelt durch Ansteuern der entsprechenden Motoren oder Aktuatoren erfolgen. Zumindest für den Zeitraum, in dem das Bauteil 120 und seine Bauteilaufnahme 140 ausschließlich durch das Festlager 170 mit der Transportvorrichtung 100 verbunden sind, stehen weder das Bauteil 120 noch die Bauteilaufnahme 140 mit dem Führungsbereich 250 oder einer anderen entsprechenden Komponente der Transportvorrichtung 100 außer dem Festlager 170 in Kontakt.

Im Anschluss daran kann die Transportvorrichtung beispielsweise auch das Bauteil 120 und seine Bauteilaufnahme 140 derart aufrichten, sodass das Bauteil 120 oder die Bauteilaufnahme 140 durch das Festlager 170 wieder frei geführt wird, ohne dass auf das Bauteil 120 und die Bauteilaufnahme 140 einwirkende Momente über das Festlager 170 durch entsprechende Zusatzkomponenten abgefangen werden. So kann das Bauteil 120 und/oder die Bauteilaufnahme 140 beispielsweise mit dem Führungsbereich 250 in Kontakt treten.

Nach dem Aufrichten des Bauteils 120 kann das Festlager 170 dann also die Bauteilaufnahme 140 gegebenenfalls derart führen, dass die Bauteilaufnahme 140 zusammen mit dem Bauteil 120 ein frei schwingt. Das freie Schwingen kann hierbei gegebenenfalls durch eine entsprechende Dämpfung unterstützt werden, wie beispielsweise durch eine mechanisch reibende Dämpfung, eine hydraulische Dämpfung, eine aerodynamische Dämpfung oder auch eine elektromotorische Dämpfung, indem beispielsweise die betreffenden Motoren 230 derart angesteuert werden, dass diese dem durch die Schwingung bewirkten Drehmoment ein zumindest partielles Drehmoment entgegenwirken lassen. Das freie Schwingen kann so beispielsweise auch mit einer ungesteuerten, gesteuerten oder sogar geregelten Dämpfung erfolgen.

Auch wenn im Zusammenhang mit den Fig. 1 und 2 bisher ausschließlich Transportvorrichtungen 100 beschrieben worden sind, welche durch das Bewegen des Festlagers 170 wenigstens in vertikaler Richtung die Bauteilaufnahme 140 mit dem daran befestigten Bauteil 120 vollständig in eine vertikale Position überführen zu können, kann bei anderen Beispielen selbstverständlich auch der Aufstellwinkelbereich kleiner als 90° sein. So kann beispielsweise eine Transportvorrichtung 100 gegebenenfalls auch so implementiert sein, dass diese das Bauteil 120 und seine Bauteilaufnahme 140 nur bis zu einem maximalen Anstellwinkel aufrichten kann, der kleiner ist als 90° bezogen auf die horizontale Richtung. Der maximale Aufrichtwinkel kann so beispielsweise bis 60°, bis 45°, bis 30°, bis 20°, bis 15°, bis 10° oder auch bis 5° gehen, um nur einige Beispiele zu nennen.

Um die Transportvorrichtung 100 mit ihrem Komponenten ansteuern zu können, kann die Transportvorrichtung beispielsweise ein Steuergerät 260 aufweisen, wie dieses in den Fig. 1 und 2 eingezeichnet ist. Das Steuergerät 260 kann beispielsweise auf Basis eines in dem Steuergerät oder einer anderen Quelle hinterlegten Routenplans bzw. auch durch Berechnung oder Erstellen des entsprechenden Routenplans Steuersignale an die einzelnen Komponenten der Transportvorrichtung in Abhängigkeit von einer Position der Transportvorrichtung entlang des Transportwegs bereitstellen, um so die betreffenden Komponenten, Motoren und Aktuatoren bei Bedarf anzusteuern. Ein Steuergerät kann so ein entsprechendes Verfahren ausführen. Ein solches Steuergerät kann beispielsweise auf Basis einer programmierbaren Hardwarekomponente realisiert werden, die ein entsprechendes Programm abarbeitet. Natürlich können auch mehr als ein Steuergerät eingesetzt werden, wobei die einzelnen Steuergeräte unterschiedliche Funktionen ausführen. Auch kann beispielsweise das Steuergerät 260 als Teil eines anderen Fahrzeugs und damit nicht als Teil des Transportfahrzeugs 200 implementiert sein, wie dies in Fig. 1 und 2 gezeigt ist.

Auch bei einem Absenken kann es gegebenenfalls ratsam sein, das Bauteil 120 und die Bauteilaufnahme 140 zunächst soweit anzuheben, dass diese ausschließlich über das Festlager 170 in der vertikalen Position gehalten werden. Um dann beispielsweise ein freies Führen des Festlagers 170 beim Absenken zu ermöglichen, kann es gegebenenfalls ratsam sein, durch einen Elektromotor oder einen anderen Aktuator das Bauteil 120 und seine Bauteilaufnahme 140 zu verschwenken, sodass nach einem entsprechenden Absenken das Bauteil 120 bzw. die Bauteilaufnahme 140 unter einem solchen Winkel mit dem Führungsbereich 250 in Kontakt tritt, dass durch ein weiteres Absenken des Festlagers 170, also einem entsprechenden Bewegen des Festlagers 170 entlang der vertikalen Richtung, das Bauteil 120 wieder abgesenkt wird. Je nach konkreter Ausgestaltung kann dies gegebenenfalls sogar vollständig ohne eine weitere aktive Verkippung durch einen Motor oder einen anderen Aktuator ab dem betreffenden Zeitpunkt erfolgen.

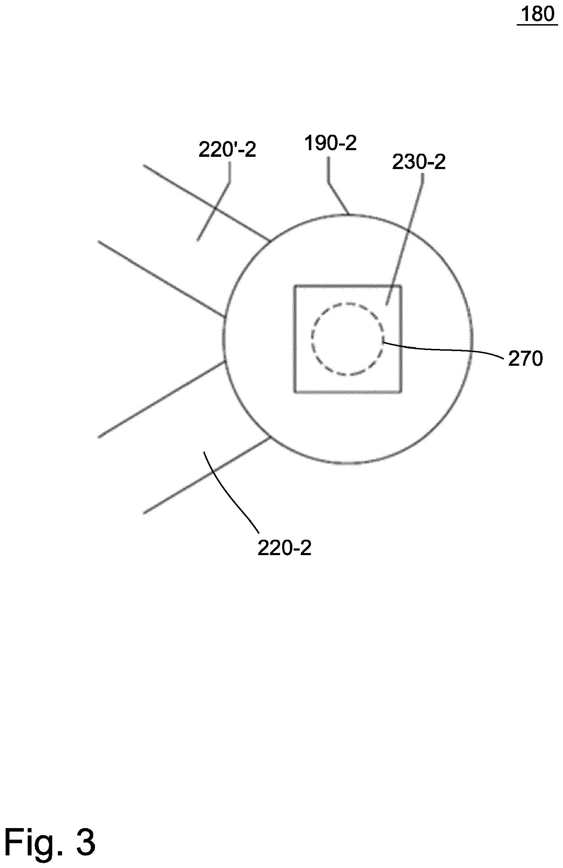

Fig. 3 zeigt eine vergrößerte Darstellung eines der Gelenke 190, genauer gesagt des Gelenks 190-2. Die anderen Gelenke 190-1, 190-3 sowie das Festlager 170 können gegebenenfalls identisch oder ähnlich zu dem Gelenk 190-2 aufgebaut sein. In das Gelenk 190-2 münden wiederum die beiden Scherenarme 220-2, 220'-2, die beispielsweise durch einen Bolzen 270 oder eine andere entsprechende Art der Verbindung miteinander schwenkbar verbunden sind. Im Bereich des Bolzens 270 ist hier wiederum der Motor 230-2 angeordnet, welcher beispielsweise über eine Verzahnung oder eine andere Kraft oder Drehmoment übertragende Konstruktion ein von ihm bereitgestelltes Drehmoment auf die Scherenarme 220 aufprägen kann. Anstelle einer Verzahnung können auch andere entsprechende Konstruktionen, beispielsweise drehbar gelagerte Hubstangen zum Einsatz kommen. Der Motor 230 oder ein entsprechender hydraulischer, pneumatischer oder hydraulischer Aktuator bzw. auch eine beliebige Kombination dieser Motoren und Aktuatoren kann so zur Umsetzung der Höhenverstellbarkeit der Anhebevorrichtung 180 eingesetzt werden.

Fig. 3 zeigt so beispielsweise, dass eine Drehachse für den oder die Lagerpunkte beispielsweise im Wesentlichen horizontal verlaufen kann. Im Falle des Festlagers 170 schneidet die erste Drehachse, welche gerade durch das Festlager 170 verläuft, die Bauteilaufnahme 140 oberhalb des Schwerpunkts des Bauteils 120 bzw. des gemeinsamen Schwerpunkts 160 des Bauteils 120 und der Bauteilaufnahme 140.

Fig. 4 zeigt eine Querschnittsdarstellung entlang der in Fig. 2 eingezeichneten Schnittebene A-A durch die Bauteilaufnahme 140 und das in dieser montierte Bauteil 120. Die Bauteilaufnahme 140 ist in dem hier gezeigten Beispiel im Wesentlichen zylindrisch ausgestaltet. Die Bauteilaufnahme 140 kann so beispielsweise rotationssymmetrisch ausgestaltet sein. Das zu transportierende Bauteil 120 kann so gegebenenfalls leichter an der Bauteilaufnahme 140 befestigt oder mit dieser verbunden werden. Hierdurch kann es möglich sein, die Wahrscheinlichkeit einer fehlerhaften Befestigung zu verringern. Ebenso kann es möglich, die Herstellung der Bauteilaufnahme 140 zu vereinfachen. Diese kann beispielsweise auch mehrteilig ausgeführt sein, beispielsweise segmentweise und/oder ringweise, sodass die Bauteilaufnahme 140 stückweise mit dem zu transportierenden Bauteil 120 verbunden werden kann.

So weist die Bauteilaufnahme 140 in dem hier gezeigten Beispiel Seitenwände 280 sowie einen Bodenbereich 290 auf, an dem die Befestigung 300 zur Befestigung des Bauteils 120 an der Bauteilaufnahme 140 angeordnet ist. Die Befestigung 300 ist hierbei in einem Innenraum der Bauteilaufnahme 140 angeordnet, sodass aufgrund der Seitenwände 280 ein Schutz des länglichen Bauteils im Bereich der Befestigung erzielt werden kann. Die Befestigung 300 kann so beispielsweise das in Fig. 4 dargestellte Rotorblatt an seiner Wurzel aufnehmen und entsprechend befestigen.

Die Befestigung 300 ermöglicht es nun in dem hier gezeigten Beispiel, das Bauteil 120 translatorisch fest mit der Bauteilaufnahme 140 zu verbinden. Bewegungen des Bauteils entlang der Haupterstreckungsrichtung 110 jedoch auch entlang anderer Bewegungsrichtungen können so durch die Befestigung 300 unterbunden werden. Dies kann beispielsweise über wenigstens eine Schraubverbindung mit der Befestigung 300 und/oder eine Verbindung über wenigstens einen Bolzen geschaffen werden. Selbstverständlich können auch andere formschlüssige Verbindungstechniken sowie kraftschlüssige, gegebenenfalls sogar stoffschlüssige Verbindungstechniken oder Kombinationen derselben eingesetzt werden.

Die Befestigung 300 ist im vorliegenden Fall derart ausgestaltet, sodass diese das Bauteil 120 um eine zweite Drehachse 310 dreht. Die zweite Drehachse 310 kann, wie in Fig. 4 gezeigt ist, mit der Haupterstreckungsrichtung 110 und/oder einer Längsrichtung der Bauteilaufnahme 140 zusammenfallen. Die Befestigung 300 kann so einen eigenständigen Motor, einen Aktuator und/oder einen Drehteller 320 umfassen, wobei der Motor, der Aktuator und/oder der Drehteller 320 gerade ein Drehen des Bauteils 120 um die zweite Drehachse 310 ermöglichen.

Über die Befestigung 300 kann somit das Bauteil 120 mit seinem ersten Ende 130 starr verbunden werden. Das bzw. die Festlager 170 ermöglichen, wie bereits zuvor erläutert wurde, eine Drehbewegung des Bauteils 120 zusammen mit der Bauteilaufnahme 140 um die erste Drehachse 340. Zu diesem Zweck weist das Festlager 170 bei dem hier gezeigten Beispiel einen auch als Lagerbolzen bezeichneten Bolzen 370 auf, welcher zusammen mit einer entsprechenden Aufnahme 380 für den Bolzen 370 das Festlager 170 mit der dazugehörigen ersten Drehachse 340 zum Aufrichten der Bauteilaufnahme 140 und des Bauteils 140 bildet. Je nach konkreter Ausgestaltung des Festlagers 170 kann so beispielsweise der Bolzen 370 als Teil der Bauteilaufnahme 140 oder auch als Teil der Anhebevorrichtung 180 ausgestaltet sein. In einem solchen Fall kann beispielsweise die entsprechende Aufnahme 380 für den Bolzen 370 dem jeweils anderen Bauteil, also beispielsweise der Anhebevorrichtung 180 im ersten Fall oder auch der Bauteilaufnahme 140 im zweiten Fall angehören. Selbstverständlich können bei anderen Beispielen jedoch auch sowohl die Anhebevorrichtung 180 wie auch die Bauteilaufnahme entsprechende Aufnahmen 380 für einen Bolzen 370 umfassen, der dann im Rahmen der Montage der Bauteilaufnahme 140 an der Anhebevorrichtung 180 an beiden befestigt wird. Je nach konkreter Ausgestaltung kann so das Festlager oder wenigstens eine Komponente des Festlagers und die Befestigung 300 für das Bauteil 120 starr miteinander verbunden sein. Hierbei können wiederum gegebenenfalls Drehbewegungen um die zweite Drehachse 310 möglich sein. Bei dem in Fig. 4 gezeigten Beispiel werden die Aufnahmen 380 für den Bolzen 370 durch entsprechende Buchsen 390 gebildet.

Im vorliegenden Beispiel ist die Befestigung 300 als Drehteller 320 ausgestaltet, deren Drehachse im Wesentlichen entlang des länglichen Bauteils, und damit entlang der Haupterstreckungsrichtung 110 verläuft. Durch ein Verdrehen des Bauteils 120 um die betreffende zweite Drehachse 310, also die Haupterstreckungsrichtung 110 kann so das Bauteil bezogen auf den Wind ausgerichtet werden, wie dies später noch erläutert wird. Der Drehteller 320 ermöglicht so eine rotatorische Bewegung des Bauteils 120, wobei der Drehteller über eine entsprechende Motorisierung beispielsweise in Form eines Elektromotors ausgerüstet sein kann. Die zweite Drehachse 310 verläuft hierbei bei aufgerichtetem Bauteil 120 im Wesentlichen vertikal, um die Ausrichtung gegen den Wind zu ermöglichen.

Die Bauteilaufnahme 140 weist an ihrem Bodenbereich 290 darüber hinaus eine Befestigung 240 für eine oder mehrere Zusatzgewichte 330 auf. Diese sind bei dem hier gezeigten Beispiel im Inneren bzw. im Innenraum der Bauteilaufnahme 140 angeordnet, können jedoch bei anderen Implementierungen gegebenenfalls auch außerhalb liegen. Durch das Zusatzgewicht 330 wird die Masse der Bauteilaufnahme 140 erhöht und ihr Schwerpunkt, der in Fig. 4 nicht eingezeichnet ist, näher zu dem Bodenbereich 290 verlagert. Als Folge kann der gemeinsame Schwerpunkt 160 des Bauteils 120 und der Bauteilaufnahme 140 ebenfalls näher an den Bodenbereich 290 und damit an das erste Ende 130 des Bauteils 120 verlagert werden. Hierdurch ist es möglich, den gemeinsamen Schwerpunkt 160 vom Bauteil 120 und Bauteilaufnahme 140 gerade in der zuvor bereits beschriebenen Art und Weise anzuordnen, sodass diese nämlich zwischen dem ersten Ende 130 des Bauteils 120 und dem Festlager 170 angeordnet ist. Durch eine entsprechende Variation des oder der Zusatzgewichte 330 kann so innerhalb der durch die Konstruktion der Bauteilaufnahme 140 vorgegebenen Grenzen die Lage des gemeinsamen Schwerpunkts 160 in Abhängigkeit von dem Bauteil 120 und seinen technischen Daten angeordnet werden.

Bei der in Fig. 4 gezeigten Situation ist so der gemeinsame Schwerpunkt 160 zwischen der ersten Drehachse 340, welche durch das Festlager 170 verläuft und um die das Bauteil 120 und die Bauteilaufnahme 140 gegenüber der Anhebevorrichtung 180 verschwenkbar sind, und dem ersten Ende 130 des Bauteils 120 angeordnet. Die zweite Drehachse 310 kann hierbei im Wesentlichen senkrecht zu der ersten Drehachse 340 verlaufen. Unabhängig hiervon kann die zweite Drehachse 310, wie in Fig. 4 gezeigt ist, im Wesentlichen parallel zu der Haupterstreckungsrichtung 110 verlaufen. Bei der in der Fig. 4 gezeigten Darstellung erstreckt sich die Bewegungsrichtung des Transportfahrzeugs 200 im Wesentlichen senkrecht zu der dort gezeigten Schnittebene A-A, wie dies auch aus Fig. 2 bereits ersichtlich ist. Hier kann also die erste Drehachse im Wesentlichen senkrecht zu der Hauptbewegungsrichtung der Transportvorrichtung 100 und damit beispielsweise zu dem Transportfahrzeug 200 liegen.

Durch die Wahl des oder der Zusatzgewichte 330 kann es so gegebenenfalls möglich sein, die Lage des gemeinsamen Schwerpunkts 160 so einzustellen, dass ein die Transportsituation angepasster Kompromiss hinsichtlich der Reduzierung der auf die Komponenten wirkenden Kräfte und Momente und gleichzeitig ein stabiler und damit sicherer Transport des Bauteils 120 möglich ist. Je näher der gemeinsame Schwerpunkt 160 der ersten Drehachse 340 liegt, desto stärker kann tendenziell die Belastung der Komponenten und damit die auftretenden Momente und Kräfte reduziert werden, wohingegen jedoch auch die Gefahr in Bezug auf eine zufällig auftretende Instabilität durch unvorhergesehene Transportbedingungen wachsen kann. Daher kann es durchaus sinnvoll sein, durch ein oder mehrere Zusatzgewichte 330 den gemeinsamen Schwerpunkt 160 vom Bauteil 120 und Bauteilaufnahme 140 in Richtung auf das erste Ende 130 des Bauteils 120 zu beabstanden.

Darüber hinaus kann beispielsweise im Falle eines nichtrotationssymmetrischen Bauteils 120, wie dies im Fall des in Fig. 4 auch gezeigten Rotorblatts häufig der Fall ist, durch eine Variation der Zusatzgewichte 330 entlang der Umfangsrichtung um das Bauteil 120 herum auch die Lage des gemeinsamen Schwerpunkts senkrecht zu der Haupterstreckungsrichtung 110 variiert werden. Hierdurch kann es möglich sein, den gemeinsamen Schwerpunkt 160 auf die Haupterstreckungsrichtung 110 bzw. genau auf die zweite Drehachse 310 der Bauteilaufnahme 140 auszurichten, sodass eine vollständige Aufrichtung des Bauteils 120 ohne den Einsatz von Motoren 230 oder ähnlichen Aktuatoren möglich sein kann. Durch eine entsprechende Variation des oder der Zusatzgewichte 330 entlang der Umfangsrichtung kann so gegebenenfalls auch ein Aufrichten des Bauteils 120 erleichtert bzw. energiesparender durchgeführt werden.

Hierzu kann es möglich sein, auch die Befestigung 240 für das oder die Zusatzgewichte 330 ebenfalls mit dem Drehteller 320 oder einer anderen entsprechenden mechanischen Konstruktion zur Verdrehung des Bauteils 120 um die zweite Drehachse 310 zu koppeln, sodass unabhängig von der jeweiligen Ausrichtung des Bauteils 120 um die zweite Drehachse 310 herum eine entsprechende Lage des gemeinsamen Schwerpunkts 160 entlang der Haupterstreckungsrichtung 110 bzw. der zweiten Drehachse 310 erzielbar sein kann. Ist dies aus konstruktiven oder anderen Gründen nicht möglich, kann es hierbei gegebenenfalls ratsam sein, vor einem entsprechenden vollständigen Aufrichten des Bauteils 120 dieses zuvor in eine entsprechende Lage um die zweite Drehachse 310 herum zu verdrehen, sodass der gemeinsame Schwerpunkt 160 wieder auf der Haupterstreckungsrichtung 110 bzw. der zweiten Drehachse 310 zum Liegen kommt. Häufig stellt dies jedoch keine signifikante Beschränkung dar, da beispielsweise während des Transports eine vollständige Aufrichtung des Bauteils 120 häufig nicht erforderlich ist, um den durchfahrbaren Kurvenradius auf einen häufig durch die Länge des Transportfahrzeugs 200 begrenzten Minimalwert zu reduzieren. Ein entsprechendes vollständiges Aufrichten kann daher beispielsweise nur an einem Verladepunkt, dem Zielort des Bauteils 120 oder einem anderen entsprechenden Ort gegebenenfalls interessant sein.

Das Bauteil 120 kann darüber hinaus über eine Auflagefläche 350 der Bauteilaufnahme 140 gelagert oder fixiert werden. Die Bauteilaufnahme 140, wie sie in Fig. 4 gezeigt ist, weist so eine Auflagefläche 350 auf, die mit dem Bauteil 120 bei einer von einer vertikalen Ausrichtung des Bauteils abweichenden Ausrichtung in Kontakt steht oder in Kontakt treten kann, um so das Bauteil 120 zu stützen. Bei der in Fig. 4 gezeigten Ausgestaltung ist die Auflagefläche 350 als Teil eines Abstandhalters oder eines Lagerrings 360 ausgeführt, über den unabhängig von der Ausrichtung des Bauteils 120 bezogen auf die zweite Drehachse 310 das Bauteil 120 an der Bauteilaufnahme 140 abgestützt werden kann. Die Auflagefläche 350 liegt hierbei bezogen auf die Haupterstreckungsrichtung 110 des Bauteils 120 zwischen dem in Fig. 4 nicht gezeigten zweiten Ende 150 und dem Festlager 170, ist also auf einer dem ersten Ende 130 abgewandten Seite bezogen auf das Festlager 170 angeordnet. Hierdurch kann eine Durchbiegung oder auch eine andere mechanische Verformung des Bauteils 120, die während des Transports auftreten kann, gegebenenfalls frühzeitig abgefangen werden, um so eine Beschädigung des Bauteils 120 zu unterbinden.

Durch eine solche zusätzliche Fixierung des Bauteils beispielsweise über einen entsprechenden Lagerungsring 360 kann es so gegebenenfalls möglich sein, ein Anschlagen des Bauteils 120 im oberen Bereich der Bauteilaufnahme 140 zu verhindern. Diese kann gegebenenfalls auch drehbar ausgestaltet sein, und beispielsweise über eine mechanische Verbindung oder auch separat über einen entsprechenden Motor oder anderen Aktuator entsprechend um die zweite Drehachse 310 verdrehbar sein.

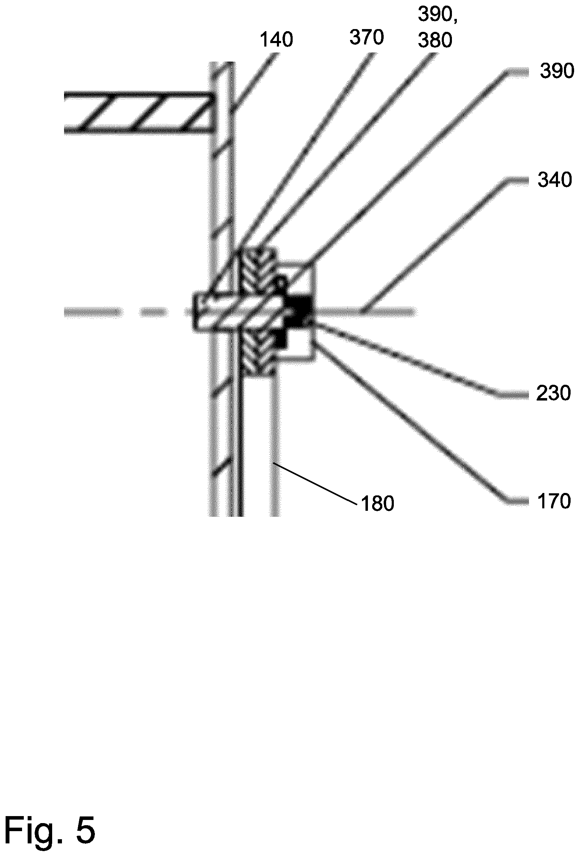

Fig. 5 zeigt hier eine Vergrößerung des Festlagers 170 auf der rechten Seite von Fig. 4. So zeigt Fig. 5, dass die Aufnahme 380 für den Bolzen 370 der Anhebevorrichtung 180 über zwei hintereinander angeordnete Buchsen gebildet ist.

Das Festlager 170 weist darüber hinaus zum Aufrichten der Bauteilaufnahme 140 und des Bauteils 120 oder auch zum Verschwenken derselben einen Motor 230 auf. Anstelle des Motors 230 kann hier wiederum ein anderer bzw. hydraulisch und/oder pneumatisch betriebener Aktuator ebenfalls implementiert werden.

Durch den Einsatz einer Transportvorrichtung 100, wie diese beispielsweise im Vorfeld beschrieben wurde, kann es so möglich sein, bei einem Transport eines länglichen Bauteils auftretende Höhenlimitierungen durch einen liegenden Transport einzuhalten. Darüber hinaus kann es möglich sein, eine Gefahr des Umfallens bei einem aufrechten Transport zu reduzieren und, wie im Folgenden noch detaillierter beschrieben werden wird, können ebenso Maßnahmen ergriffen werden, um ein entsprechendes Umkippen zu verhindern.

So kann das Bauteil 120 beispielsweise bei einem normalen Transport auf einem Zugfahrzeug aufliegend von einem Anhänger oder einem Nachläufer gehalten werden. Selbstverständlich kann dies auch umgekehrt ausgestaltet sein. Der Nachläufer kann so seinerseits ebenfalls angetrieben sein. Dabei kann das Bauteil 120 in der beschriebenen Art und Weise aufgerichtet bzw. wieder hingelegt werden, ohne dass ein Umladen oder ein Wechseln eines Fahrzeugs nötig ist, was jedoch grundsätzlich auch weiterhin als Option zur Verfügung steht. Durch ein Anstellen, also beispielsweise ein Schrägstellen gegenüber der liegenden Ausrichtung um mehr als 5° zuzüglich der entsprechenden Geländeneigung kann so bereits eine häufig nicht unerhebliche Reduzierung des durchfahrbaren minimalen Kurvenradius ermöglicht werden. Ebenso kann eine Aufrichtung von wenigstens 10°, wenigstens 15°, wenigstens 20°, wenigstens 30°, wenigstens 45° oder wenigstens 60° je nach genauer Ausgestaltung der Transportvorrichtung 100 verwendet werden, um auch Kurven sicher durchfahren zu können.

So kann die Bauteilaufnahme 140 beispielsweise um das Bauteil 120 herum zusammengesetzt werden, wie dies bei Halbschalenbauweise oder Gitterbauweise möglich ist. Diese kann dann so fixiert werden, dass die Bauteilaufnahme bezogen auf das Bauteil 120 nicht mehr verrutscht. Im Falle eines Rotorblatts kann dieses an seinem Blattanschluss verschraubt und/oder verklemmt werden. Im Falle eines Turmbauteils kann ein Verschrauben an einem Flansch und/oder ein Verklemmen des Bauteils eingesetzt werden, um nur einige von den möglichen Befestigungstechnologien zu nennen. Ebenso kann jedoch auch das Bauteil 120 in die Bauteilaufnahme 140 eingesetzt werden.

Die Bauteilaufnahme 140 kann dann mit oder auch ohne das Bauteil 140 in die Anhebevorrichtung 180 eingesetzt werden. Für den liegenden Transport kann optional eine weitere Abstützung oder Lagerung an wenigstens einer weiteren Stelle vorgesehen werden, die beispielsweise außerhalb des Festlagers 170, beispielsweise durch eine Verbindung im Bereich der Rotorblattspitze mit einem Nachläufer erfolgen kann. Die Bauteilaufnahme 140 und das Bauteil 120 können beispielsweise einseitig durch die Anhebevorrichtung 180 gelagert werden, wenn auch eine zweiseitige Lagerung, wie diese zuvor auch beschrieben wurde, gegebenenfalls einen stabileren Transport sowie ein stabileres Verfahren des Bauteils 120 ermöglichen kann. Zur Höhenverstellung können die bereits zuvor genannten Anhebevorrichtungen 180, beispielsweise ausfahrbare Pneumatik- oder Hydraulikzylinder, einseitige Gelenke, Scherenhubvorrichtungen sowie elektrische, pneumatische und/oder hydraulische Aktuatoren verwendet werden. Je nach konkreter Ausgestaltung kann hierbei sowie entsprechend den weiteren Spezifikationen der Bauteilaufnahme 140 beispielsweise im Hinblick auf die Zusatzgewichte 330 die Höhe des gemeinsamen Schwerpunkts 160 von der Bauteilaufnahme 140 und der Bauteil 120 um mehrere Meter verstellbar sein. So kann beispielsweise der gemeinsame Schwerpunkt 160 von einer Höhe von 2 Metern auf eine Höhe von 15 Metern verstellbar sein, um nur ein Beispiel zu nennen.

Grundsätzlich kann eine Drehung der Bauteilaufnahme 140 aktiv oder passiv um die beispielsweise horizontalliegende erste Drehachse 340 erfolgen. Bei einem gleichzeitigen Ausfahren der Anhebevorrichtung 180 kann die Drehung hierbei passiv erfolgen, also durch Nutzung der Schwerkraft, indem das Bauteil 120 mit seinem unteren Ende (erstes Ende 120) bzw. der Bauteilaufnahme 140 beim Aufrichten oder Absenken der Anhebevorrichtung 180 auf der Fixierung 205 oder dem Transportfahrzeug 200 gleitet oder rollt. Eine solche passive Drehung kann also beispielsweise unter Ausnutzung eines Loslagers oder einer anderen Führung ermöglicht werden.

Selbstverständlich kann jedoch auch eine Drehung aktiv vorgenommen werden, indem das Aufrichten und das Drehen unabhängig voneinander, beispielsweise durch Ansteuern der entsprechenden Elektromotoren 230 an dem Festlager 170 vorgenommen werden. Hinsichtlich der konstruktiven Ausgestaltung kann die Drehbarkeit der Bauteilaufnahme 140 um die beispielsweise im Wesentlichen horizontale Achse (erste Drehachse 340) ebenfalls Abweichungen von der Horizontalen umfassen oder auch kompensieren. Dies kann beispielsweise durch eine asymmetrische Ansteuerung der Aktuatoren bzw. Motoren 230 erfolgen, auch wenn dies im weiteren Verlauf der Beschreibung nicht weiter berücksichtigt wird.

Auch bietet es sich an, an dieser Stelle darauf hinzuweisen, dass die erste Drehachse 340 bei Weitem nicht zwingend waagerecht liegen muss. Diese sollte jedoch oberhalb des gemeinsamen Schwerpunkts 160 verlaufen. So kann beispielsweise eine solche horizontale Ausrichtung bei einer Hangneigung oder Querneigung der Transportvorrichtung 100 auf dem Transportweg gegebenenfalls nicht gegeben sein. Auch durch eine unterschiedliche Stellung der Aktuatoren zur Höhenverstellung oder anderer Komponenten der Anhebevorrichtung 180 können entsprechende Abweichungen auftreten.

Die erste Drehachse 340 verläuft in aufgerichteter Stellung vom Fahrzeug aus betrachtet über dem Massenschwerpunkt 160 der Bauteilaufnahme 140 und/oder über dem gemeinsamen Massenschwerpunkt 160 von Bauteilaufnahme 140 und Bauteil 120, wodurch eine Reduzierung, gegebenenfalls sogar eine Minimierung der Haltekräfte möglich sein kann. Wie bereits zuvor erwähnt wurde, kann die Lagerung hierbei als Gleitlager, Magnetlager aber auch auf andere Art und Weise ausgeführt werden. Die Anhebevorrichtung 180 kann hierbei auf dem Transportfahrzeug 200 oder auch einem Anhänger angebracht und mit diesem verbunden sein, kann jedoch auch über ein Zwischenstück, beispielsweise in Form einer Fixierung 200 mit diesem verbunden sein.

Einzelne Komponenten oder Abschnitte der Komponenten der Transportvorrichtung 100 können hierbei beispielsweise beschichtete Oberflächen, Rundungen an den einzelnen Lagern oder andere entsprechende Veredelungen aufweisen. So kann beispielsweise der Führungsbereich 250 entsprechend beschichtet sein. Auch kann die Aufnahme 150 beispielsweise an ihrer Unterkante abgeschrägte Rundungen aufweisen, sodass auch ein Absenken ohne ein motorisches Schwenken erfolgen kann, um also auch beim Absenken eine Gleitführung ermöglichen zu können. Selbstverständlich können jedoch auch Rollen und andere Wälzkörper an der Bauteilaufnahme 140 oder dem entsprechenden Bereich 250 des Transportfahrzeugs 200 bzw. der Fixierung 205 angebracht werden.

Das Bauteil 120 und/oder die Bauteilaufnahme 140 können hierbei um ihre Längsachse, also die zweite Drehachse 310 gegebenenfalls drehbar gelagert sein, beispielsweise über den bereits erwähnten Drehteller 220 an der Verbindung zwischen dem Bauteil 120 und der Bauteilaufnahme 140. Alternativ oder ergänzend kann eine entsprechende Drehmechanik jedoch auch im Bereich der Anhebevorrichtung 180 implementiert sein. Auch kann ein leichtes Schwingen zum Abfangen von Böen durch das Festlager 170 ermöglicht werden, wobei die auftretenden Schwingungen beispielsweise über die inhärente Reibung oder auch gezielte Reibelemente mechanischer oder aktiver Natur abgebaut werden können.

Durch den Einsatz einer Transportvorrichtung 100 kann es so möglich sein, auf Teilabschnitten des Transportwegs, bei denen eine Höhenbegrenzung kritisch ist, wie beispielsweise auf Autobahnen, diese einzuhalten, während auf anderen Teilabschnitten auftretende minimale Kurvenradien durch ein Aufrichten des Bauteils 120 berücksichtigt werden können, die gegebenenfalls bei einem liegenden Transport nicht oder nur unter bestimmten Bedingungen durchfahren werden können, die zum Beispiel stark von der Gesamtlänge des Bauteils 120 und der Transportvorrichtung 100 sowie weiterer Komponenten abhängen können. Dies kann beispielsweise beim Durchfahren von Kreisverkehren, engen Dorfstraßen oder Serpentinenstraßen im ländlichen Raum auftreten.

Ebenso kann durch den Einsatz einer solchen Transportvorrichtung 100 die Teilung eines Rotorblatts vermieden werden, durch die ansonsten eine Inhomogenität und damit gegebenenfalls eine Schwächung in die Struktur eingebracht wird. Auch können so gegebenenfalls geringere Toleranzen bei größeren Belastungen vermieden werden. Beispielsweise kann so ein häufig aus unterschiedlichen Gründen nicht zur Verfügung stehender und typischerweise auch mit sehr hohen Kosten verbundener Lufttransport vermeidbar sein, der gegebenenfalls sogar aufgrund der Masse und der Größe des betreffenden Bauteils von vorne herein ausscheidet. Ebenso können an dem an- oder aufgestellten Rotorblatt gegebenenfalls hohe Kräfte und Momente vermieden werden, die auftreten könnten, wenn eine Handhabung des betreffenden Bauteils von einem Ende der betreffenden Komponente her erfolgen würde.

Auch kann es möglich sein unterschiedliche Transportsituationen zu berücksichtigen, zu denen beispielsweise eine Schrägstellung, aber auch der Fahrtwind und andere Parameter zählen können. So kann beispielsweise das Umkippen des Bauteils und des Transportfahrzeugs gegebenenfalls leichter verhindert werden, wie dies durch Wind, Fahrtwind und Neigung der Straße bewirkt werden kann. Durch die Überwachung der entsprechenden Werte und Parameter können so gegebenenfalls Umwelteinflüsse leichter kompensiert werden. Ein solches Verfahren kann beispielsweise auf Basis eines Steuergeräts 230 und/oder einer entsprechenden Steuersoftware implementiert werden. Hierdurch kann gegebenenfalls auch der Einsatz einer Transportvorrichtung 100 gemäß einem Beispiel bei weiterreichenden Umweltbedingungen, beispielsweise bei höheren Windstärken, möglich sein.

Eine Transportvorrichtung 100 kann so zu einer Reduzierung der auftretenden Kräfte und Momente führen, wobei jedoch eine Lagerung in dem gemeinsamen Schwerpunkt 160 des Bauteils 120 und der Bauteilaufnahme 140 vermieden wird. Eine solche Lagerung könnte zu einer undefinierten Position des Bauteils 120 führen. Schon aus diesem Grund wird die Lagerung durch das Festlager 170 oberhalb des gemeinsamen Schwerpunkts 160 vorgesehen. Andererseits bietet jedoch eine Lagerung im gemeinsamen Schwerpunkt 160 die Möglichkeit einer weiteren Reduzierung der auftretenden Kräfte und Momente, die jedoch mit einer Instabilität der Konstruktion einhergehen kann.

Die hier beschriebene Lagerung kann grundsätzlich ein freies Schwingen ermöglichen. Dies führt häufig trotzdem nur zu geringen Belastungen für die Transportvorrichtung 100, was beispielsweise bei einem vollständig aufgerichteten Bauteil 120 in einem entsprechend statisch unbestimmten System auftreten kann.

Erfolgt die Lagerung nicht in ausreichender Höhe für ein freies Schwingen, kann es gegebenenfalls notwendig sein, auftretende Momente durch ein Hilfslager aufzunehmen, also beispielsweise durch den bereits zuvor beschriebenen Führungsbereich 250 oder andere entsprechende Loslagerkonstruktionen. In einem solchen Fall kann das System aus Transportvorrichtung 100 und Bauteil 120 folglich in einem statisch bestimmten Zustand vorliegen.

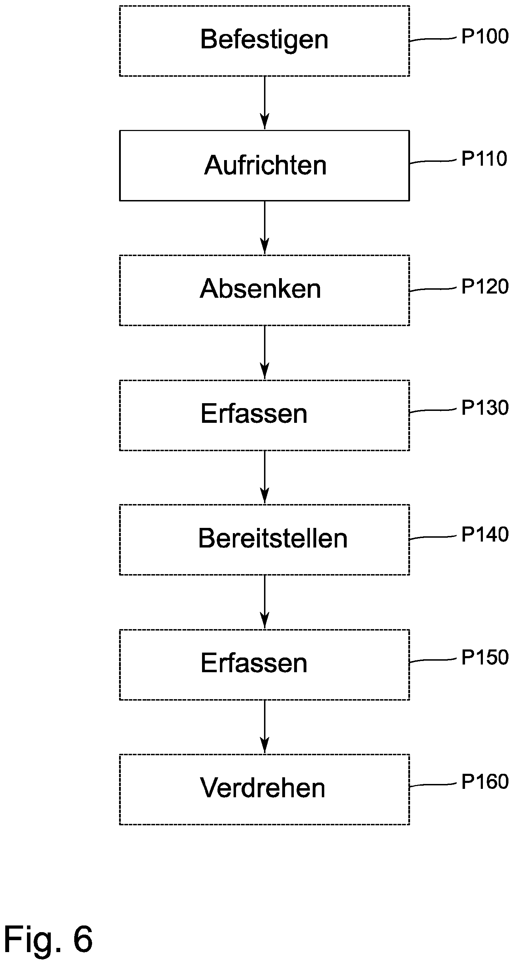

Der eigentliche Transport des Bauteils 120 kann durch den Einsatz einer entsprechenden Transportvorrichtung 100 beispielsweise so erfolgen, dass Maßnahmen gegen ein Umkippen des Bauteils 120 frühzeitig ergriffen werden können. Ein entsprechendes Flussdiagramm eines Verfahrens zum Transportieren eines solchen Bauteils 120 mittels einer Transportvorrichtung 100, wie sie zuvor beschrieben wurde, ist so in Fig. 6 dargestellt.

Ein solches Verfahren kann beispielsweise zunächst in einem Prozess P100 ein Befestigen des Bauteils 120 an der oder in der Bauteilaufnahme 140 umfassen. In einem Prozess P110 kann dann das Bauteil 120 wenigstens teilweise oder auch vollständig aufgerichtet werden, indem das Festlager 170 wenigstens entlang der vertikalen Richtung auf dem Transportweg aufgerichtet wird. Hierbei kann das wenigstens teilweise oder vollständige Aufrichten des Bauteils 120 beispielsweise bei einem Stillstehen der Transportvorrichtung 100 oder eines mit der Transportvorrichtung 100 gekoppelten Fahrzeugs erfolgen. Auch kann dieses bei einem Unterschreiten einer vorgegebenen Maximalgeschwindigkeit der Transportvorrichtung 100 oder des mit der Transportvorrichtung 100 gekoppelten Fahrzeugs erfolgen. Um beispielsweise kritische Fahrsituationen zu verhindern, kann das wenigstens teilweise oder vollständige Aufrichten des Bauteils auch ausschließlich bei dem Stillstehen der Transportvorrichtung 100 oder des mit der Transportvorrichtung 100 gekoppelten Fahrzeugs erfolgen. Gleiches gilt ebenso für das Unterschreiten der vorgegebenen Maximalgeschwindigkeit.

Das wenigstens teilweise oder vollständige Aufrichten des Bauteils kann so beispielsweise ein Aufrichten des Bauteils um wenigstens 15° gegenüber einer horizontalen Ebene umfassen. Natürlich kann ein entsprechendes Verfahren ebenso wiederum das Absenken des Bauteils 120 in einem Prozess P120 umfassen. Auch kann dieses beispielsweise bei einem Stillstehen oder einem Unterschreiten einer entsprechenden Maximalgeschwindigkeit erfolgen. Um eine entsprechende Sicherheit gegebenenfalls zu gewährleisten, kann ein solches Absenken auch ebenfalls ausschließlich beim Stillstehen der Transportvorrichtung 100 bzw. des mit dieser gekoppelten Fahrzeugs oder auch ausschließlich beim Unterschreiten der Maximalgeschwindigkeit der Transportvorrichtung 100 oder des mit ihr gekoppelten Fahrzeugs erfolgen.

Um Umwelteinflüsse zu erfassen und gefährliche Fahrsituationen frühzeitig zu erkennen, kann in einem Prozess P130 wenigstens ein einen Fahrzeugzustand anzeigender Wert erfasst werden und in einem Prozess P140 ein Alarmsignal bereitgestellt werden, wenn der wenigstens eine erfasste Wert ein Überschreiten eines Sicherheitskriteriums oder mehrerer Sicherheitskriterien anzeigt. Ein solches Sicherheitskriterium kann beispielsweise überschritten sein, wenn der Neigungswinkel der Transportvorrichtung 100 entlang der Hauptbewegungsrichtung der Transportvorrichtung gegenüber einer Bewegung in der Ebene 20° überschreitet. Ebenso kann das Sicherheitskriterium überschritten sein, wenn der Neigungswinkel der Transportvorrichtung 100 senkrecht zu der Hauptbewegungsrichtung derselben gegenüber einer Bewegung der Ebene 15° überschreitet. Die Neigungswinkel entlang der Hauptbewegungsrichtung wie auch senkrecht dazu können bei anderen Beispielen auch niedrigere maximale Werte, beispielsweise maximal 10°, maximal 8° oder maximal 5° annehmen. Hierbei können für die beiden Winkel die vorgenannten maximalen Werte voneinander unabhängig festgelegt werden. Diese können jedoch auch identisch sein.

Ebenso kann das Sicherheitskriterium überschritten sein, wenn eine Fahrgeschwindigkeit der Transportvorrichtung 100 bzw. in Abhängigkeit von einer herrschenden Windstärke und/oder Windrichtung eine Sicherheitsgrenze überschreitet.

In einem Prozess P150 kann darüber hinaus optional die herrschende Windstärke und/oder die Windrichtung erfasst werden. Hierbei können auch momentane Schwankungen der Windrichtung und/oder der Windstärke berücksichtigt werden, die beispielsweise durch Böen oder andere räumlich begrenzte Effekte entstehen können. Das Erfassen der Windstärke und/oder der Windrichtung kann so auch das Erfassen der Böigkeit, beispielsweise die Standardabweichung einer mittleren Windgeschwindigkeit, umfassen. Durch ein Verdrehen des Bauteils 120 in einem Prozess P160 um die zweite Drehachse 310, die von der ersten Drehachse 340 abweicht und beispielsweise senkrecht zu dieser angeordnet sein kann, können so aerodynamische Kräfte, die auf das Bauteil 120 einwirken, reduziert werden.

Das Bauteil 120 kann so beispielsweise um eine vertikale oder nahezu vertikale Achse ausgerichtet werden, sodass der Druck auf das Bauteil reduziert oder sogar minimiert wird. Hierzu kann ein Bezug zur Windrichtung, Fahrtrichtung und Bauform, also beispielsweise im Falle eines Rotorblatts eine gegebenenfalls vorgebogene oder verdrehte Form desselben einbezogen werden. Hierdurch kann eine Reduktion der Belastungen erzielt werden, was wiederum eine Gefahr eines Umkippens reduzieren kann.

Ebenso können bei der Transportvorrichtung 100 auch Ausleger quer zur Hauptbewegungsrichtung bzw. Fahrtrichtung verwendet werden. So kann eine Vergrößerung des Radstandes beispielsweise durch Stützräder realisiert werden. Der Radstand der Stützräder von der Mitte des Fahrzeugs kann dabei beispielsweise auf 2,5 m zuzüglich des Radius des Bauelements 120 vergrößert werden. Selbstverständlich können ebenso das Bauteil 120 und/oder die Bauteilaufnahme 140 abgespannt werden.

Eine Begrenzung der Fahrt mit aufrechtem Transport kann auf zulässige Windverhältnisse, beispielsweise maximal 6 m/s Windgeschwindigkeit für ein 50 Meter langes Bauteil festgelegt werden. Droht eine Überschreitung, kann das Bauteil 120 von seiner aufrechten oder angestellten Position wiederum in die horizontale Position überführt werden. Es kann ebenso möglich sein, die zulässige Steigung des Fahrzeugs auf Werte von beispielsweise -20° bis +20° entlang der Fahrtrichtung und -15° bis +15° quer zur Fahrrichtung, also der Hauptbewegungsrichtung der Transportvorrichtung 100, einzuschränken. Bei schwereren Bauteilen 120 und/oder anderen Situationen können auch kleinere Winkel, beispielsweise maximal 15°, maximal 10°, maximal 8° oder maximal 5° unabhängig voneinander sowohl senkrecht wie auch parallel zur Fahrtrichtung und damit zur Hauptbewegungsrichtung der Transportvorrichtung 100 verwendet werden.

Ebenso kann die maximale Fahrtgeschwindigkeit in Abhängigkeit der zu erwartenden Windverhältnisse, also der Windgeschwindigkeit, der Windrichtung und der Böigkeit begrenzt werden, wie dies bereits beschrieben wurde. So kann beispielsweise die Fahrgeschwindigkeit bei Windstille auf 20 km/h begrenzt sein. Ebenso kann die Positionierung der Transportvorrichtung 100 und des Bauteils 120 in oder nahe der Mitte des Fahrzeugs so sein, dass das Fahrzeug selbst in Fahrtrichtung stützend wirkt. So kann beispielsweise ein Abstand zwischen der Längsachse bzw. Haupterstreckungsrichtung 110 des Bauelements 120 sowie der Vorder- bzw. Hinterachse beispielsweise einen Mindestwert in Bezug auf den Radius des Bauelements 120 aufweisen.

Das Steuergerät 260, welches beispielsweise zur Durchführung eines entsprechenden Verfahrens herangezogen werden kann, kann so die Aktuatorik und die Steuerung des Transportfahrzeugs vollständig oder teilweise übernehmen. So kann das Steuergerät beispielsweise zur Ausrichtung des Bauteils 120 herangezogen werden. Das Steuergerät kann hierbei Steuersignale zur Fahrtroute, Fahrtgeschwindigkeit, Ausrichtung des Rotorblatts bzw. von Rotorblatt und Bauteilaufnahme 140 abgeben. Die Steuersignale können dabei auf Messungen von Windgeschwindigkeit und Richtung, Fahrgeschwindigkeit, Ausrichtung des Rotorblatts oder der Transportvorrichtung und gegebenenfalls des diese ziehenden Fahrzeugs abhängen. Die Steuersignale können hierbei zusätzlich die Geometrie des Rotorblatts, die Geometrie der Transportvorrichtung 100 sowie gegebenenfalls weitere Geometrien des Fahrzeugs berücksichtigen. Auf einem solchen Steuergerät kann beispielsweise ein entsprechendes Programm mit einem Programmcode ausgeführt werden, welches dann ein entsprechendes Verfahren umsetzt.

Auch wenn hier gerade als Beispiel eines Bauteils ein Rotorblatt beschrieben wurde, sind jedoch Beispiele bei weitem nicht auf ein Rotorblatt beschränkt. Vielmehr können auch andere Bauteile mit einer länglichen Form, die beispielsweise mindestens doppelt so lang wie breit sind, transportiert werden. Bauelemente einer Windenergieanlage, wie beispielsweise ein Rotorblatt, ein Teil eines Rotorblatts, ein Turmsegment oder dergleichen stellen so lediglich Beispiele dar.

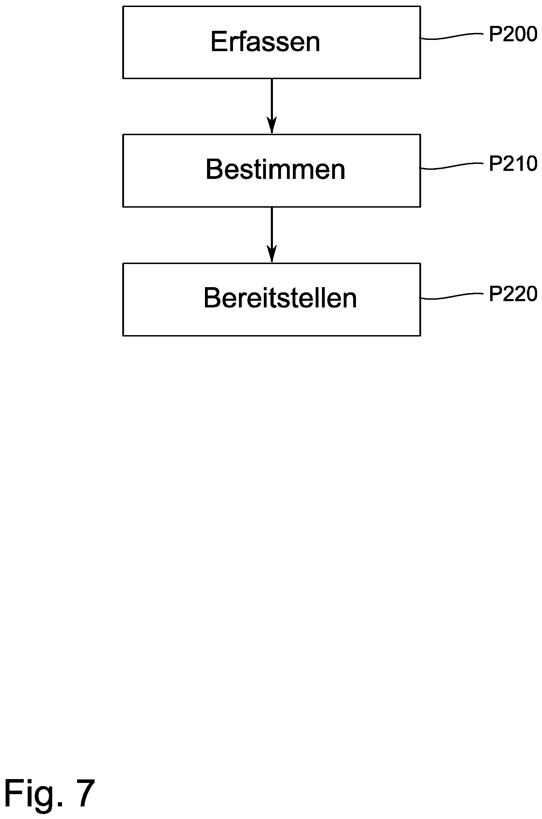

Fig. 7 zeigt ferner ein Flussdiagram eines Verfahrens zum Erstellen eines Routenplaners zum Transportieren eines entsprechenden länglichen Bauteils 120 mittels einer zuvor beschriebenen Transportvorrichtung 100. Das Verfahren umfasst in einem Prozess P200 ein Erfassen einer geplanten Route. Dieses kann beispielsweise ein Erfassen eines Startpunktes und eines Zielpunktes umfassen. Die Startposition kann hierbei beispielsweise auch die aktuelle Position der Transportvorrichtung 100 bzw. des Bauteils 120 sein, die durch entsprechende automatisierte Ortungsverfahren ermittelbar sein kann. So kann die Transportvorrichtung 100 beispielsweise über ein entsprechendes Ortungssystem beispielsweise unter Nutzung von GPS-Daten (GPS = Global Positioning System = globales Positionserfassungssystem) verfügen. Aber auch andere Erfassungsmethoden können hier verwendet werden.

Auf Basis des Startpunktes und des Endpunktes kann dann mithilfe eines automatischen Algorithmus gegebenenfalls unter Verwendung intermediärer Wegpunkte eine entsprechende Route errechnet und bestimmt werden. In einem Prozess P210 kann dann der notwendige Anstellwinkel in Abhängigkeit des zu transportierenden Bauteils 120 und der geplanten Route bestimmt werden. Hierbei können beispielsweise Höhenbegrenzungen ebenso wie minimale Kurvenradien oder dergleichen berücksichtigt werden. Auf Basis der so gewonnenen Werte können dann in einem Prozess P220 die notwendigen Steuerdaten für die Transportvorrichtung 100 bereitgestellt werden. Diese können beispielsweise in Form digitaler Daten in einem entsprechenden Speicher oder auf einem entsprechenden Speichermedium abgelegt werden. Diese können jedoch auch während des Transports durch das entsprechende Steuergerät 230 berechnet werden. So kann ein solches Verfahren zum Erstellen eines Routenplans beispielsweise im Vorfeld des Transports, jedoch auch während des Transports ausgeführt werden.

Eine Transportvorrichtung 100 zum Transport mindestens eines Bauteils 120 auf einem Fahrzeug kann so mindestens das eine Bauteil 120, das eine Längserstreckung zwischen einem ersten Ende 130 und einem zweitem Ende 150 aufweist, eine Lagerungsvorrichtung 140 zur Befestigung und Lagerung des mindestens einen Bauteils 120 in der Transportvorrichtung 100, einen Massenschwerpunkt 160 der Lagerungsvorrichtung 170 oder des Verbundes aus Lagerungsvorrichtung und mindestens einem zu transportierenden Bauteil 120 sowie eine (erste) Drehachse 340 zum Anstellen oder Aufrichten der Lagerungsvorrichtung 170 oder des Verbundes aus Lagerungsvorrichtung 170 und mindestens einem Bauteil 120 aus einer liegenden Position und umgekehrt umfassen, die sich in nichtliegender Position, also beispielswiese angestellter oder aufrechter Position, oberhalb des Massenschwerpunktes 160 befindet. Die Transportvorrichtung kann ferner eine Einrichtung 300 zur Befestigung des mindestens einen Bauteils 120 in der Lagerungsvorrichtung 140 und eine Hubvorrichtung 180 zur Veränderung der vertikalen Position des Massenschwerpunktes 160 gegenüber einem Transportfahrzeug 200 oder einer Fixierung 205 der Hubvorrichtung 180 auf dem Transportfahrzeug 200 umfassen. Die Transportvorrichtung kann hierbei ein (Fest-)Lager 170 aufweisen, mit dem die Lagerungsvorrichtung 170 oder der Verbund aus Lagerungsvorrichtung 170 mit mindestens einem zu transportierenden Bauteil 120 im Bereich der (ersten) Drehachse 340 fixiert werden kann und das zweite Ende 150 der Lagerungsvorrichtung 170 und/oder des Bauteils 120 im Wesentlichen parallel zum Transportfahrzeug 200 horizontal geführt werden kann.

Bei einer solchen Transportvorrichtung 100 kann das zweite Ende 150 der Lagerungsvorrichtung und/oder des Bauteils 120 Kontakt zur Oberfläche des Transportfahrzeuges 200 aufweisen. Bei einer solchen Transportvorrichtung 100 kann das zweite Ende 150 der Lagerungsvorrichtung 170 und/oder des Bauteils 120 eine freie Führung - ohne Kontakt zur Oberfläche des Transportfahrzeuges - aufweisen oder frei schwingen.

Bei einer solchen Transportvorrichtung 100 kann der Kontakt zur Oberfläche des Fahrzeuges 200 als Gleitlager, Magnetlager und/oder mit Rollen auf dem Transportfahrzeug 200 auf einer Fixierung 205 der Hubvorrichtung 180 oder auf der Lagerungsvorrichtung 140 mit oder ohne mindestens einer Führungsschiene ausgeführt sein. Bei einer Transportvorrichtung 100 kann die Lagerungsvorrichtung 140 eine Vorrichtung für eine (lösbare) Verbindung mit dem mindestens einen Bauteil 120 aufweisen, beispielsweise durch Bohrungen, Schrauben, Bolzen etc. zur Befestigung des Bauelementes in der Lagerungsvorrichtung. Ebenso können gegebenenfalls translatorische Bewegungen des Bauelementes 120 in der Lagerungsvorrichtung 140 verhindert werden.

Bei einer Transportvorrichtung 100 kann die Verbindung zwischen der Lagerungsvorrichtung 140 und dem mindestens einen Bauteil 120 als Drehverbindung ausgeführt sein, beispielsweise als Drehteller. Bei einer Transportvorrichtung 100 kann so die Lagerungsvorrichtung 140 mindestens ein Element zur Lagerung an der Außenseite, beispielsweise einen Lagerbolzen etc. an der Außenseite, zur Drehung von Aufnahme und Bauelement um eine mehr oder weniger horizontale Achse umfassen.

Bei einer Transportvorrichtung 100 kann die Lagerungsvorrichtung 140 oder der Verbund aus Lagerungsvorrichtung 140 und Bauteil 120 ein Zusatzgewicht 330 zur Veränderung des Schwerpunktes 160 aufweisen. Bei einer Transportvorrichtung 100 kann ferner die Hubvorrichtung 180 eine Drehverbindung mit dem Transportfahrzeug 200 oder mit der Fixierung 205 der Hubvorrichtung 180 auf dem Transportfahrzeug 200 aufweisen. Bei einer Transportvorrichtung 100 kann die Transportvorrichtung 100 auf eine fahrbare Konstruktion, beispielsweise ein angetriebenes Fahrzeug oder einen Anhänger mit Rädern, Ketten oder dergleichen, aufgesetzt oder integriert sein.

Bei einem Verfahren zum Transport mindestens eines Bauteils 120 mit einer Transportvorrichtung 100, wie diese zuvor beschrieben wurde, kann die Lagerungsvorrichtung 140 gemeinsam mit dem mindestens einem Bauteil 120 auf mindestens einem Teilabschnitt des Transportweges so angestellt sein oder werden, dass der Winkel der Achse zwischen dem ersten Ende 130 und dem zweiten Ende 150 des Bauteils 100 gegenüber dem Erdboden einen Winkel von mindestens 5°, beispielsweise auch mindestens 15°, beispielsweise mindestens 30°, beispielsweise mindestens 45° oder beispielsweise mehr als 60° aufweist.

Bei einem solchen Verfahren zum Transport mindestens eines Bauteils 120 mit einer Transportvorrichtung 100 kann das Bauteil 120, die Lagerungseinrichtung 140, die Hubvorrichtung 180 oder das Transportfahrzeug 200 so um eine Achse gedreht, abgestützt und/oder abgespannt werden, das die Gefahr einer unzulässigen Schwerpunkverlagerung der Transportvorrichtung 100 mit dem mindestens einen Bauteil 120 reduziert wird. Bei einem solchen Verfahren zum Transport mindestens eines Bauteils 120 mit einer Transportvorrichtung 100 kann der Neigungswinkel des Fahrzeuges 200 auf 20° oder weniger in Fahrtrichtung und/oder der Neigungswinkel des Fahrzeuges 200 auf 15° oder weniger quer zur Fahrtrichtung begrenzt werden. Ebenso kann die maximal zulässige Fahrgeschwindigkeit des Transportfahrzeuges in Abhängigkeit der Windgeschwindigkeit und/oder der Windrichtung festgelegt werden. Bei einem Verfahren zum Transport mindestens eines Bauteils 120 mit einer Transportvorrichtung 100 kann das Transportfahrzeug 200 einen Stellplatz ansteuern, wo die Transportvorrichtung 100 mit dem mindestens einen Bauteil 120 in eine horizontale Position gebracht wird, wenn vorher festgelegte Parameter zur Windgeschwindigkeit und/oder zur Windrichtung überschritten werden.

Ein Steuergerät zur Durchführung eines Verfahrens, wie dies zuvor beschrieben wurde, kann Steuersignale zu einer Fahrtroute und/oder einer Fahrgeschwindigkeit und/oder einer Ausrichtung des Bauteils, einer Ausrichtung der Lagerungsvorrichtung, einer Ausrichtung der Hubvorrichtung und/oder einer Ausrichtung des Transportfahrzeuges erstellen bzw. bereitstellen. Bei einem solchen Steuergerät können die Steuersignale unter Nutzung von Messwerten oder anderen Informationen zu einer Windgeschwindigkeit, einer Fahrgeschwindigkeit, einer Ausrichtung des mindestens einen Bauteils, einer Ausrichtung der Lagerungsvorrichtung, einer Ausrichtung der Hubvorrichtung und/oder einer Ausrichtung des Transportfahrzeuges und/ oder zur Geometrie des mindestens einen Bauteils 120, zur Geometrie der Lagerungsvorrichtung 140, zur Geometrie der Hubvorrichtung 180 und/oder zur Geometrie des Transportfahrzeuges 200 erstellt werden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Beispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Prozess oder als ein Merkmal eines Prozesses zu verstehen ist. Analog dazu stellen Aspekte, die im Zusammenhang mit einem oder als ein Prozess beschrieben wurden, auch eine Beschreibung eines entsprechenden Blocks oder Details oder Merkmale einer entsprechenden Vorrichtung dar.

Ein Beispiel kann so als Programm mit einem Programmcode zum Durchführen eines Verfahrens gemäß einem Beispiel umgesetzt sein, wenn das Programm auf einer programmierbaren Hardwarekomponente abläuft. Die einzelnen Prozesse können hierbei durch Ansteuerungen entsprechender Aktuatoren, einem Auslesen von Speicherstellen oder anderen Datenquellen, numerischen und anderen Manipulationen von Daten sowie anderen Prozessen erzielt werden. Im Rahmen eines solchen Programms, jedoch auch im Rahmen anderer Umsetzungen eines Verfahrens gemäß einem Beispiel, können so die einzelnen Prozesse beispielsweise ein Erzeugen, Bereitstellen und gegebenenfalls Empfangen von Steuersignalen, Sensorsignalen und anderen Signalen umfassen. Das Senden kann ebenfalls ein Schreiben oder Abspeichern eines Wertes in eine Speicherstelle oder ein Register umfassen. Entsprechend kann ein Auslesen oder Empfangen auch ein entsprechendes Auslesen eines Registers oder einer Speicherstelle umfassen. Diese Signale können beispielsweise als elektrische, optische oder funktechnische Signale übertragen werden und hinsichtlich ihrer Signalwerte und ihrer zeitlichen Ausgestaltung voneinander unabhängig kontinuierlich oder diskret ausgestaltet sein. Die entsprechenden Signale können so beispielsweise analoge Signale, jedoch auch digitale Signale umfassen.

Je nach bestimmten Implementierungsanforderungen können Beispiele der Erfindung in Hardware oder in Software implementiert sein. Die Implementierung kann unter Verwendung eines digitalen Speichermediums, beispielsweise einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Beispiele umfassen also einen Datenträger, der elektronisch lesbare Steuersignale aufweist, die in der Lage sind, mit einem programmierbaren Computersystem oder einer programmierbaren Hardwarekomponente derart zusammenzuwirken, dass eines der hierin beschriebenen Verfahren durchgeführt wird. Ein Beispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Beispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Beispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Beispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Beispiel kann eines der Verfahren während seiner Durchführung beispielsweise dadurch umsetzen, dass dieses Speicherstellen ausliest oder in diese Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteilen hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern und so beispielsweise mittels Aktuatoren auch komplexere Prozesse durchführen.

Die oben beschriebenen Beispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Beispiele hierin präsentiert wurden, beschränkt sei.

### Bezugszeichenliste

- 100: Transportvorrichtung
- 110: Haupterstreckungsrichtung
- 120: Bauteil
- 130: erstes Ende
- 140: Bauteilaufnahme
- 150: zweites Ende
- 160: gemeinsamer Schwerpunkt
- 170: Festlager
- 180: Anhebevorrichtung
- 190: Gelenk
- 200: Transportfahrzeug
- 205: Fixierung
- 210: Hauptbewegungsrichtung
- 220: Scherenarm
- 230: Motor
- 240: Befestigung
- 250: Führungsbereich
- 260: Steuergerät
- 270: Bolzen
- 280: Seitenwand
- 290: Bodenbereich
- 300: Befestigung
- 310: zweite Drehachse
- 320: Drehteller
- 330: Zusatzgewicht
- 340: erste Drehachse
- 350: Auflagefläche
- 360: Lagerring
- 370: Bolzen
- 380: Aufnahme
- 390: Buchse

## Patentansprüche

1. Transportvorrichtung (100) zum Transportieren eines bezogen auf eine Haupterstreckungsrichtung (110) länglichen Bauteils (120) mit einem ersten (130) und einem zweiten Ende (150), wobei das erste Ende (130) einem Schwerpunkt des Bauteils näher als das zweite Ende (150) ist, umfassend:
eine Bauteilaufnahme (140) und eine Anhebevorrichtung (180),
wobei die Bauteilaufnahme (140) mit der Anhebevorrichtung (180) über ein Festlager (170) um wenigstens eine erste Drehachse (340) verdrehbar gekoppelt ist;
wobei die Anhebevorrichtung (180) ausgebildet ist, um das Festlager (170) wenigstens in einer vertikalen Richtung zu bewegen;
wobei die Bauteilaufnahme (140) eine Befestigung (300) umfasst, die ausgebildet ist, um das Bauteil (120) an der Bauteilaufnahme (140) zu befestigen,
**dadurch gekennzeichnet, dass**
die Transportvorrichtung einen Führungsbereich (250) aufweist, der ausgebildet und angeordnet ist, um wenigstens zeitweise bei einem Aufrichten des Bauteils mit der Bauteilaufnahme in Kontakt zu stehen,
wobei die Bauteilaufnahme (140) derart ausgebildet ist, dass wenn ein gemeinsamer Schwerpunkt (160) der Bauteilaufnahme (140) und des zu transportierenden Bauteils (120) entlang der Haupterstreckungsrichtung (110) des Bauteils zwischen dem ersten Ende (130) des Bauteils (120) und dem Festlager (170) liegt, ein aufrichtendes Drehmoment auftritt, welches grundsätzlich versucht, die Bauteilaufnahme (140) zusammen mit dem Bauteil (120) aufzurichten.

2. Transportvorrichtung (100) nach Anspruch 1, bei der die Bauteilaufnahme (140) derart ausgebildet ist, dass der gemeinsame Schwerpunkt (160) höchstens 10% einer Gesamtlänge des Bauteils (120) entlang der Haupterstreckungsrichtung (110) von dem Festlager (170) entfernt angeordnet ist.

3. Transportvorrichtung (100) nach einem der vorhergehenden Ansprüche, bei der die Bauteilaufnahme (140) ausgebildet ist, sodass das erste Ende (130) des Bauteils (120) in einem Innenraum der Bauteilaufnahme (140) in einem an der Befestigung (300) befestigten Zustand angeordnet ist.

4. Transportvorrichtung (100) nach einem der vorhergehenden Ansprüche, bei der die Befestigung (300) ausgebildet ist, um das Bauteil (120) translatorisch fest mit der Bauteilaufnahme (140) zu verbinden.

5. Transportvorrichtung (100) nach einem der vorhergehenden Ansprüche, die ausgebildet ist, um auf oder mit einem Fahrzeug (200) befestigbar zu sein, mit einem Fahrzeug (200) koppelbar zu sein und/oder auf einem Fahrzeug (200) integriert ist, um das Bauteil (120) bei einer Geradeausfahrt in einer Ebene entlang einer Hauptbewegungsrichtung (210) zu transportieren.

6. Transportvorrichtung (100) nach einem der vorhergehenden Ansprüche, bei der die erste Drehachse (340) im Wesentlichen senkrecht zu einer Hauptbewegungsrichtung (210) der Transportvorrichtung liegt.

7. Transportvorrichtung (100) nach einem der vorhergehenden Ansprüche, bei der das Bauteil (120) ein Rotorblatt einer Windenergieanlage ist.

8. Verfahren zum Transportieren eines bezogen auf eine Haupterstreckungsrichtung (110) länglichen Bauteils (120) mittels einer Transportvorrichtung (100) nach einem der Ansprüche 1 bis 7, umfassend:
ein Erfassen (P150) einer herrschenden Windstärke und Windrichtung und ein Verdrehen (P160) des Bauteils (120), um eine von der der ersten Drehachse (340) abweichenden, zweiten Drehachse (310), um aerodynamische Kräfte, die auf das Bauteil (120) einwirken, zu reduzieren.

9. Verfahren nach Anspruch 8, bei dem das wenigstens teilweise oder vollständige Aufrichten (P110) des Bauteils (120) ein Aufrichten des Bauteils (120) um wenigstens 5° gegenüber einer horizontalen Ebene umfasst.

10. Verfahren nach einem der Ansprüche 8 oder 9, ferner umfassend,
wenigstens teilweises oder vollständiges Aufrichten (P110) des an der Bauteilaufnahme (140) befestigten Bauteils (120) durch Anheben des Festlagers (170) wenigstens entlang einer vertikalen Richtung auf einem Transportweg.

## Claims

1. Transport device (100) for transporting a structural part (120), which is elongate with respect to a main direction of extent (110), having a first end (130) and a second end (150), wherein the first end (130) is closer to a centre of gravity of the structural part than the second end (150), comprising:
a structural part receptacle (140) and a lifting device (180),
wherein the structural part receptacle (140) is coupled to the lifting device (180) via a fixed bearing (170) so as to be rotatable about at least a first axis of rotation (340);
wherein the lifting device (180) is designed to move the fixed bearing (170) at least in a vertical direction;
wherein the structural part receptacle (140) comprises a fastening (300) which is designed to fasten the structural part (120) to the structural part receptacle (140),
**characterized in that**
the transport device has a guide region (250) which is designed and arranged to be at least intermittently in contact with the structural part receptacle when straightening up the structural part,
wherein the structural part receptacle (140) is designed in such a way that, if a common centre of gravity (160) of the structural part receptacle (140) and of the structural part (120) to be transported is situated along the main direction of extent (110) of the structural part between the first end (130) of the structural part (120) and the fixed bearing (170), there occurs a straightening-up torque which fundamentally causes the structural part receptacle (140) to be straightened up together with the structural part (120) .

2. Transport device (100) according to Claim 1, in which the structural part receptacle (140) is designed in such a way that that the common centre of gravity (160) is arranged away from the fixed bearing (170) by at most 10% of a total length of the structural part (120) along the main direction of extent (110).

3. Transport device (100) according to either of the preceding claims, in which the structural part receptacle (140) is designed such that the first end (130) of the structural part (120) is arranged in an interior of the structural part receptacle (140) in a fastened state on the fastening (300).

4. Transport device (100) according to one of the preceding claims, in which the fastening (300) is designed to connect the structural part (120) to the structural part receptacle (140) in a translationally fixed manner.

5. Transport device (100) according to one of the preceding claims, which is designed to be able to be fastened on or with a vehicle (200), to be able to be coupled to a vehicle (200) and/or is integrated on a vehicle (200) in order to transport the structural part (120) during straight-ahead travel in a plane along a main direction of movement (210).

6. Transport device (100) according to one of the preceding claims, in which the first axis of rotation (340) is situated substantially perpendicularly to a main direction of movement (210) of the transport device.

7. Transport device (100) according to one of the preceding claims, in which the structural part (120) is a rotor blade of a wind turbine.

8. Method for transporting a structural part (120), which is elongate with respect to a main direction of extent (110), by means of a transport device (100) according to one of Claims 1 to 7, comprising:
detecting (P150) a prevailing wind strength and wind direction and rotating (P160) the structural part (120) about a second axis of rotation (310) differing from the first axis of rotation (340) in order to reduce aerodynamic forces which act on the structural part (120).

9. Method according to Claim 8, in which the at least partial or complete straightening-up (P110) of the structural part (120) comprises straightening up the structural part (120) by at least 5° with respect to a horizontal plane.

10. Method according to either of Claims 8 and 9, further comprising,
at least partial or complete straightening-up (P110) of the structural part (120) fastened to the structural part receptacle (140) by lifting the fixed bearing (170) at least along a vertical direction on a transport path.

## Revendications

1. Dispositif de transport (100) destiné à transporter un élément structural (120), allongé par rapport à une direction d'extension principale (110), comprenant une première (130) et une deuxième extrémité (150), la première extrémité (130) étant plus proche d'un centre de gravité de l'élément structural que la deuxième extrémité (150), comprenant :
un logement d'élément structural (140) et un dispositif de levage (180),
le logement d'élément structural (140) étant couplé avec le dispositif de levage (180) par le biais d'un palier fixe (170) de manière à pouvoir tourner autour d'au moins un premier axe de rotation (340) ;
le dispositif de levage (180) étant configuré pour déplacer le palier fixe (170) au moins dans une direction verticale ;
le logement d'élément structural (140) comportant une fixation (300) qui est configurée pour fixer l'élément structural (120) au logement d'élément structural (140), **caractérisé en ce que**
le dispositif de transport possède une zone de guidage (250) qui est configurée et disposée pour se trouver en contact avec le logement d'élément structural au moins temporairement lors d'un dressage de l'élément structural,
le logement d'élément structural (140) étant configuré de telle sorte que lorsqu'un centre de gravité commun (160) du logement d'élément structural (140) et de l'élément structural (120) à transporter se trouve entre la première extrémité (130) de l'élément structural (120) et le palier fixe (170) le long de la direction d'extension principale (110) de l'élément structural, il se produit un couple de dressage qui essaye fondamentalement de dresser le logement d'élément structural (140) conjointement avec l'élément structural (120) .

2. Dispositif de transport (100) selon la revendication 1, avec lequel le logement d'élément structural (140) est configuré de telle sorte que le centre de gravité commun (160) est disposé en étant éloigné du palier fixe (170) au maximum de 10 % d'une longueur totale de l'élément structural (120) le long de la direction d'extension principale (110).

3. Dispositif de transport (100) selon l'une des revendications précédentes, avec lequel le logement d'élément structural (140) est configuré de telle sorte que la première extrémité (130) de l'élément structural (120) est disposée dans un espace intérieur du logement d'élément structural (140) dans un état fixé à la fixation (300).

4. Dispositif de transport (100) selon l'une des revendications précédentes, avec lequel la fixation (300) est configurée pour relier l'élément structural (120) au logement d'élément structural (140) de manière fixe en translation.

5. Dispositif de transport (100) selon l'une des revendications précédentes, lequel est configuré pour pouvoir être fixé sur ou à un véhicule (200), pour pouvoir être attelé à un véhicule (200) et/ou est intégré sur un véhicule (200) en vue de transporter l'élément structural (120) dans un plan le long d'une direction de déplacement principale (210) lors d'un déplacement en ligne droite.

6. Dispositif de transport (100) selon l'une des revendications précédentes, avec lequel le premier axe de rotation (340) est sensiblement perpendiculaire à une direction de déplacement principale (210) du dispositif de transport.

7. Dispositif de transport (100) selon l'une des revendications précédentes, avec lequel l'élément structural (120) est une pale de rotor d'une éolienne.

8. Procédé de transport d'un élément structural (120), allongé par rapport à une direction d'extension principale (110), au moyen d'un dispositif de transport (100) selon l'une des revendications 1 à 7, comprenant : une détection (P150) d'une force de vent et d'une direction de vent dominantes et une rotation (P160) de l'élément structural (120) autour d'un deuxième axe de rotation (310), différent du premier axe de rotation (340), afin de réduire les forces aérodynamiques qui agissent sur l'élément structural (120).

9. Procédé selon la revendication 8, avec lequel le dressage (P110) au moins partiel ou complet de l'élément structural (120) comprend un dressage de l'élément structural (120) d'au moins 5° par rapport à un plan horizontal.

10. Procédé selon l'une des revendications 8 et 9, comprenant en outre, le dressage (P110) au moins partiel ou complet de l'élément structural (120) fixé au logement d'élément structural (140) par levage du palier fixe (170) au moins le long d'une direction verticale sur un trajet de transport.
